# EUROPEAN PATENT APPLICATION

(11) **EP 1 950 964 A1**
(43) Date of publication of application: **30.07.2008**
(21) Application number: 06811624.3
(22) Date of filing: 11.10.2006
(51) Int. Cl.: H04N 7/01, G09G 3/20, G09G 3/36

(54) **IMAGE DISPLAY DEVICE AND METHOD**

(30) Priority: 07.11.2005 JP 2005322391
(71) Applicant: Sharp Kabushiki Kaisha, Osaka-shi, Osaka 545-8522 (JP)
(72) Inventor: HANAOKA, Toshiharu, Chiba-chi, Chiba 262-0021 (JP); YAMAMOTO, Kenichiroh, Chiba-chi, Chiba 266-0005 (JP); FURUKAWA, Hiroyuki, Sakura-shi, Chiba 285-0811 (JP); UENO, Masafumi, Urayasu-shi, Chiba 279-0014 (JP); YOSHII, Takashi, Chiba-shi, Chiba 261-0001 (JP)
(74) Representative: Müller - Hoffmann & Partner
(86) International application number: PCT/JP2006/320317
(87) International publication number: WO 2007/052452

(57) **Abstract**

An image display device comprising a frame rate converting (FRC) portion can prevent image degradation at a screen boundary part attributed to the FRC processing when displaying an image obtained by combining a plurality of screens. The image display device comprises an FRC portion 10 for converting the number of frames of an input image signal by interpolating an image signal subjected to a motion compensation process between frames of the input image signal and a screen combining portion 13 for combining a plurality of screens. When displaying an image obtained by combining a plurality of screens, the screen combining portion 13 combines a plurality of screens by matching a motion detection block boundary when performing the motion compensation process by the FRC portion 10 with the respective screen boundaries of the plurality of screens.

## Description

### TECHNICAL FIELD

The present invention relates to an image display device and method including a function of converting a frame rate or field rate, and, more particularly, to an image display device and an image display method of the device that prevent the image quality deterioration in a screen boundary part due to a motion-compensated rate conversion process.

### BACKGROUND OF THE INVENTION

As compared to conventional cathode-ray tubes (CRTs) primarily used for realizing moving images, LCDs (Liquid Crystal Displays) have a drawback, so-called motion blur, which is the blurring of outline of a movement portion perceived by a viewer when displaying an image with movement. It is suggested that this motion blur arises from the LCD display mode itself (see, e.g., patent document 1 and non-patent document 1).

Since fluorescent material is scanned by an electron beam to cause emission of light for display in CRTs, the light emission of pixels is basically impulse-like although slight afterglow of the fluorescent material exists. This is called an impulse-type display mode. On the other hand, in the case of LCDs, an electric charge is accumulated by applying an electric field to liquid crystal and is retained at a relatively high rate until the next time the electric field is applied. Especially, in the case of the TFT mode, since a TFT switch is provided for each dot configuring a pixel and each pixel normally has an auxiliary capacity, the ability to retain the accumulated electric charge is extremely high. Therefore, the light emission is continued until the pixels are rewritten by the application of the electric field based on image information of the next frame or field (hereinafter, represented by the frame). This is called a hold-type display mode.

Since the impulse response of the image displaying light has a temporal spread in the above hold-type display mode, temporal frequency characteristics are deteriorated along with spatial frequency characteristics, resulting in the motion blur. That is, since the human eye can smoothly follow a moving object, if the light emission time is long as in the case of the hold type, movement of image seems jerky and unnatural due to a time integration effect.

To improve the motion blur in the above hold-type display mode, a frame rate (number of frames) is converted by interpolating an image between frames in a known technology. This technology is called FRC (Frame Rate Converter) and is put to practical use in liquid crystal display devices, etc.

Conventionally known methods of converting the frame rate include various techniques such as simply repeating read-out of the same frame for a plurality of times and frame interpolation using linear interpolation between frames (see, e.g., non-patent document 2). However, in the case of the frame interpolation process using the linear interpolation, unnaturalness of motion (jerkiness, judder) is generated due to the frame rate conversion, and the motion blur disturbance due to the above hold-type display mode cannot sufficiently be improved, resulting in inadequate image quality.

To eliminate effects of the jerkiness, etc., and improve quality of moving images, a motion-compensated frame interpolation (motion compensation) process using motion vectors has been proposed. In this motion compensation process, since a moving image itself is captured and compensated, highly natural moving images can be acquired without deteriorating the resolution and generating the jerkiness. Since interpolation image signals are generated with motion compensation, the motion blur disturbance due to the above hold-type display mode can sufficiently be improved.

Above patent document 1 discloses a technology of motion-adaptively generating interpolation frames to increase a frame frequency of a display image for improving deterioration of spatial frequency characteristics causing the motion blur. In this case, at least one interpolation image signal interpolated between frames of a display image is motion-adaptively created from the previous and subsequent frames, and the created interpolation image signals are interpolated between the frames and are sequentially displayed.

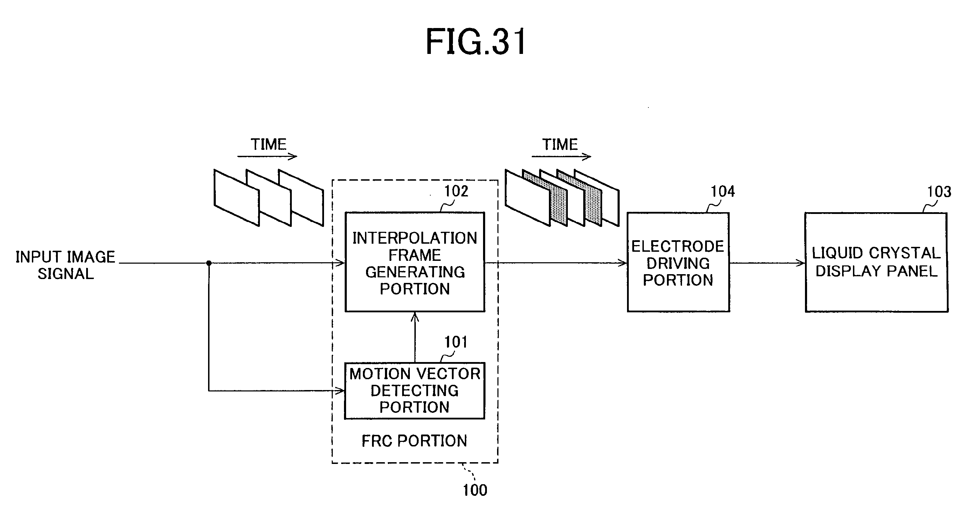

Fig. 31 is a block diagram of an outline configuration of an FRC drive display circuit in a conventional liquid crystal display device and, in Fig. 31, the FRC drive display circuit includes an FRC portion 100 that converts the number of frames of the input image signal by interpolating the image signals subjected to the motion compensation process between frames of the input image signal, an active-matrix liquid crystal display panel 103 having a liquid crystal layer and an electrode for applying the scan signal and the data signal to the liquid crystal layer, and an electrode driving portion 104 for driving a scan electrode and a data electrode of the liquid crystal display panel 103 based on the image signal subjected to the frame rate conversion by the FRC portion 100.

The FRC portion 100 includes a motion vector detecting portion 101 that detects motion vector information from the input image signal and an interpolation frame generating portion 102 that generates interpolation frames based on the motion vector information acquired by the motion vector detecting portion 101.

In the above configuration, the motion vector detecting portion 101 may obtain the motion vector information with the use of, for example, a block matching method and a gradient method described later or if the motion vector information is included in the input image signal in some form, this information may be utilized. For example, the image data compression-encoded with the use of the MPEG format includes motion vector information of a moving image calculated at the time of encoding, and this motion vector information may be acquired.

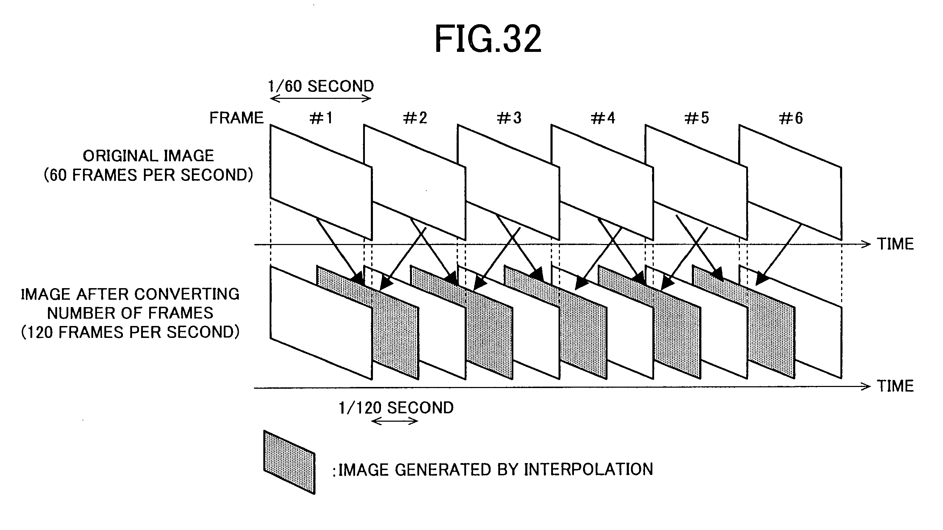

Fig. 32 is a view for explaining a frame rate conversion process by the conventional FRC drive display circuit shown in Fig. 31. The FRC portion 100 generates interpolation frames (gray-colored images in Fig. 32) between frames with the motion compensation using the motion vector information output from the motion vector detecting portion 101 and sequentially outputs the generated interpolation frame signals along with the input frame signals to perform a process of converting the frame rate of the input image signal from 60 frames per second (60 Hz) to 120 frames per second (120 Hz).

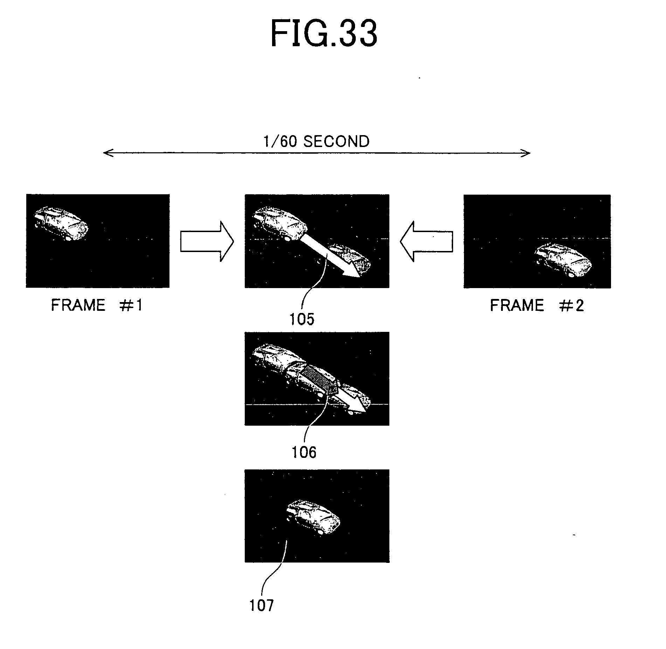

Fig. 33 is a view for explaining an interpolation frame generation process of the motion vector detecting portion 101 and the interpolation frame generating portion 102. The motion vector detecting portion 101 uses the gradient method, etc., to detect a motion vector 105 from, for example, a frame #1 and a frame #2 shown in Fig. 32. That is, the motion vector detecting portion 101 obtains the motion vector 105 by measuring a direction and an amount of movement in 1/60 second between the frame #1 and the frame #2. The interpolation frame generating portion 102 then uses the obtained motion vector 105 to allocate an interpolation vector 106 between the frame #1 and the frame #2. An interpolation frame 107 is generated by moving an object (in this case, an automobile) from a position of the frame #1 to a position after 1/120 second based on the interpolation vector 106.

By performing the motion-compensated frame interpolation process with the use of the motion vector information to increase a display frame frequency in this way, the display state of the LCD (the hold-type display mode) can be made closer to the display state of the CRT (the impulse-type display mode) and the image quality deterioration can be improved which is due to the motion blur generated when displaying a moving image.

In the motion-compensated frame interpolation process, it is essential to detect the motion vectors for the motion compensation. For example, the block matching method and the gradient method are proposed as representative techniques for the motion vector detection. In the gradient method, the motion vector is detected for each pixel or small block between two consecutive frames and this is used to interpolate each pixel or small block of the interpolation frame between two frames. That is, an image at an arbitrary position between two frames is interpolated at an accurately compensated position to convert the number of frames.
Patent Document 1: Specification of Japanese Patent No. 3295437
Non-Patent Document 1: Ishiguro Hidekazu and Kurita Taiichiro, "Consideration on Motion Picture Quality of the Hold Type Display with an octuple-rate CRT", IEICE Technical Report, Institute of Electronics, Information and Communication Engineers, EID96-4 (1996-06), p.19-26
Non-Patent Document 2: Yamauchi Tatsuro, "TV Standards Conversion", Journal of the Institute of Television Engineers of Japan, Vol. 45, No. 12, pp.1534-1543 (1991)

### DISCLOSURE OF THE INVENTION

### PROBLEMS TO BE SOLVED BY THE INVENTION

By the way, as sizes are increased in image display devices with the hold-type characteristics represented by liquid crystal display devices, a function of multi-screen display for a multiplicity of images is becoming widely used.

However, since the above FRC process is not assumed to be executed for an image combining a multiplicity of screens, motion compensation errors are generated due to erroneously generating a motion vector from one image to another image in respective screen boundary parts at the time of multi-screen, and the interpolation images are collapsed in the boundary parts of the multi-screen, resulting in deterioration of the image quality of the display image.

Although an FRC circuit may be provided for each image making up the multi-screen, for example, in prevention measure for the image quality deterioration, this is not practical since costs are increased by providing the FRC circuits to the number of screens.
As above, in the FRC process at the time of performing the multi-screen display, no effective method has been devised for improving the image quality deterioration in the screen boundary parts.

The present invention was conceived in view of the above situations and it is therefore the object of the present invention to prevent the image quality deterioration in a screen boundary part due to the FRC process when a plurality of screens is combined and displayed in an image display device including a motion-compensated frame rate converting (FRC) portion.

### MEANS FOR SOLVING THE PROBLEMS

In order to solve the above problems, a first technical means of the present invention is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device matching motion detection block boundaries when applying the motion compensation process with the respective screen boundaries of the plurality of screens.

A second technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device comprising a controlling means that controls the motion compensation process for the respective screen boundary parts of the plurality of screens.

A third technical means is the image display device as defined in the second technical means, wherein the rate converting means includes a motion vector detecting portion that detects motion vector information between consecutive frames or fields included in the input image signal, an interpolation vector allocating portion that allocates an interpolation vector between the frames or the fields based on the detected motion vector information, an interpolation image generating portion that generates an interpolation image signal from the allocated interpolation vector, and an image interpolating portion that interpolates the generated interpolation image signal between the frames or the fields.

A fourth technical means is the image display device as defined in the third technical means, wherein the controlling means performs control such that the motion vector detecting portion avoids detecting a motion vector having a value crossing a boundary of the screens.

A fifth technical means is the image display device as defined in the third or the fourth technical means, wherein the rate converting means includes an initial vector memory that accumulates an initial vector used to detect motion vectors, and wherein the controlling means performs control such that the motion vector detecting portion avoids selecting an initial vector having a value crossing a boundary of the screens from the initial vector memory.

A sixth technical means is the image display device as defined in the third technical means, wherein the controlling means performs control such that the motion vector detected by the motion vector detecting portion in the screen boundary part is set to be a zero vector.

A seventh technical means is the image display device as defined in the third technical means, wherein the controlling means performs control such that the interpolation vector allocating portion avoids evaluating a motion vector having a value crossing a boundary of the screens.

An eighth technical means is the image display device as defined in the third technical means, wherein the controlling means performs control such that an interpolation vector of an interpolation block in the screen boundary part is set to be a zero vector.

A ninth technical means is the image display device as defined in the eighth technical means, wherein the controlling means adds flag information to the interpolation block in the screen boundary part to set the output to zero for the interpolation vector of the interpolation block with the flag information added.

A tenth technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device further comprising another rate converting means that inserts an image signal not subjected to the motion compensation process between frames or fields of the input image signal to convert the number of frames or fields of the input image signal, the device outputting an image signal with the number of frames or fields converted by the another rate converting means to the display panel for the respective screen boundary parts of the plurality of screens.

An eleventh technical means is the image display device as defined in the tenth technical means, wherein the another rate converting means interpolates an image signal subjected to a linear interpolation process between frames or fields of the input image signal to convert the number of frames or fields of the input image signal.

A twelfth technical means is the image display device as defined in the tenth technical means, wherein the another rate converting means inserts between frames or fields of the input image signal an image signal of the frames or fields to convert the number of frames or fields of the input image signal.

A thirteenth technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device varying compensation intensity of the motion compensation process for the respective screen boundary parts of the plurality of screens.

A fourteenth technical means is the image display device as defined in the thirteenth technical means, wherein the rate converting means includes an interpolation image generating portion that performs weighted addition of the image signal subjected to the motion compensation process and an image signal subjected to a linear interpolation process at a predetermined rate to generate an interpolation image signal, and wherein the weighted addition rate is varied for the respective screen boundary parts of the plurality of screens.

A fifteenth technical means is the image display device as defined in the fourteenth technical means, wherein the interpolation image generating portion defines the image signal subjected to the linear interpolation process as the interpolation image signal for the respective screen boundary parts of the plurality of screens, and wherein the interpolation image generating portion defines the image signal subjected to the motion compensation process as the interpolation image signal for the parts other than the respective screen boundary parts of the plurality of screens.

A sixteenth technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device comprising a controlling means that disables the motion compensation process in the rate converting means when the plurality of screens is combined and displayed.

A seventeenth technical means is the image display device as defined in the sixteenth technical means, wherein the rate converting means includes a motion vector detecting portion that detects motion vector information between consecutive frames or fields included in the input image signal, an interpolation vector allocating portion that allocates an interpolation vector between the frames or the fields based on the detected motion vector information, an interpolation image generating portion that generates an interpolation image signal from the allocated interpolation vector, and an image interpolating portion that interpolates the generated interpolation image signal between the frames or the fields.

An eighteenth technical means is the image display device as defined in the seventeenth technical means, wherein when the plurality of screens is combined and displayed, the controlling means sets the motion vector detected by the motion vector detecting portion to a zero vector to disable the motion compensation process.

A nineteenth technical means is the image display device as defined in the seventeenth technical means, wherein when the plurality of screens is combined and displayed, the controlling means sets the interpolation vector allocated by the interpolation vector allocating portion to a zero vector to disable the motion compensation process.

A twentieth technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device outputting the input image signal to the display panel without converting the number of frames or fields of the input image signal when the plurality of screens is combined and displayed.

A twenty-first technical means is the image display device as defined in the twentieth technical means, wherein a drive frequency of the display panel displaying the image signals can be changed, and wherein when the plurality of screens is combined and displayed, the drive frequency of the display panel is changed in accordance with a frame frequency or a field frequency of the input image signal.

A twenty-second technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device further comprising another rate converting means that inserts an image signal not subjected to the motion compensation process between frames or fields of the input image signal to convert the number of frames or fields of the input image signal, the device outputting an image signal with the number of frames or fields converted by the another rate converting means to the display panel when the plurality of screens is combined and displayed.

A twenty-third technical means is the image display device as defined in the twenty-second technical means, wherein the another rate converting means inserts between frames or fields of the input image signal an image signal of the frames or fields to convert the number of frames or fields of the input image signal.

A twenty-fourth technical means is the image display device as defined in the twenty-second technical means, wherein the another rate converting means interpolates an image signal subjected to a linear interpolation process between frames or fields of the input image signal to convert the number of frames or fields of the input image signal.

A twenty-fifth technical means is the image display device as defined in the twenty-second technical means, wherein the another rate converting means inserts a predetermined monochromatic image signal between frames or fields of the input image signal to convert the number of frames or fields of the input image signal.

A twenty-sixth technical means is an image display device comprising a rate converting means that interpolates an image signal subjected to a motion compensation process between frames or fields of an input image signal to convert and output the number of frames or fields of the input image signal to a display panel, the device including a screen combining means that combines a plurality of screens for displaying a plurality of image signals, the device varying compensation intensity of the motion compensation process in the rate converting means when the plurality of screens is combined and displayed.

A twenty-seventh technical means is the image display device as defined in the twenty-sixth technical means, wherein the rate converting means includes an interpolation image generating portion that performs weighted addition of the image signal subjected to the motion compensation process and an image signal subjected to a linear interpolation process at a predetermined rate to generate an interpolation image signal, and wherein the weighted addition rate is varied when the plurality of screens is combined and displayed.

A twenty-eighth technical means is the image display device as defined in the twenty-seventh technical means, wherein the interpolation image generating portion defines the image signal subjected to the linear interpolation process as the interpolation image signal when the plurality of screens is combined and displayed, and wherein the interpolation image generating portion defines the image signal subjected to the motion compensation process as the interpolation image signal when the plurality of screens is not combined and displayed.

A twenty-ninth technical means is an image display method having the step of interpolating an image signal subjected to a motion compensation process between frames or fields of an input image signal to convert and output the number of frames or fields of the input image signal to a display panel, comprising the steps of: combining a plurality of screens for displaying a plurality of image signals; and matching motion detection block boundaries when applying the motion compensation process with the respective screen boundaries of the plurality of screens.

A thirtieth technical means is an image display method having the step of interpolating an image signal subjected to a motion compensation process between frames or fields of an input image signal to convert and output the number of frames or fields of the input image signal to a display panel, comprising the steps of: combining a plurality of screens for displaying a plurality of image signals, and controlling the motion compensation process for the respective screen boundary parts of the plurality of screens.

A thirty-first technical means is the image display method as defined in the thirtieth technical means, wherein control is performed to avoid detecting a motion vector having a value crossing a boundary of the screens.

A thirty-second technical means is the image display method as defined in the thirtieth or the thirty-first technical means, wherein control is performed to avoid selecting an initial vector having a value crossing a boundary of the screens.

A thirty-third technical means is the image display method as defined in the thirtieth technical means, wherein control is performed to set the motion vector in the screen boundary part to a zero vector.

A thirty-fourth technical means is the image display method as defined in the thirtieth technical means, wherein control is performed to set an interpolation vector of an interpolation block in the screen boundary part to a zero vector.

A thirty-fifth technical means is an image display method having the step of interpolating an image signal subjected to a motion compensation process between frames or fields of an input image signal to convert and output the number of frames or fields of the input image signal to a display panel, comprising the steps of: combining a plurality of screens for displaying a plurality of image signals; and interpolating an image signal subjected to a linear interpolation process between frames or fields of the input image signal for the respective screen boundary parts of the plurality of screens.

A thirty-sixth technical means is an image display method having the step of interpolating an image signal subjected to a motion compensation process between frames or fields of an input image signal to convert and output the number of frames or fields of the input image signal to a display panel, comprising the steps of: combining a plurality of screens for displaying a plurality of image signals; and inserting between frames or fields of the input image signal an image signal of the frames or fields for the respective screen boundary parts of the plurality of screens.

A thirty-seventh technical means is an image display method having the step of interpolating an image signal subjected to a motion compensation process between frames or fields of an input image signal to convert and output the number of frames or fields of the input image signal to a display panel, comprising the steps of: combining a plurality of screens for displaying a plurality of image signals; and varying compensation intensity of the motion compensation process for the respective screen boundary parts of the plurality of screens.

A thirty-eighth technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and disabling the motion compensation process when it is determined that the plurality of screens is combined.

A thirty-ninth technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and changing a drive frequency of a display panel in accordance with a frame frequency or a field frequency of the input image signal when it is determined that the plurality of screens is combined.

A fortieth technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and inserting between frames or fields of the input image signal an image signal of the frames or fields to convert the number of frames or fields of the input image signal when it is determined that the plurality of screens is combined.

A forty-first technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and interpolating an image signal subjected to a linear interpolation process between frames or fields of the input image signal to convert the number of frames or fields of the input image signal when it is determined that the plurality of screens is combined.

A forty-second technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and inserting a predetermined monochromatic image signal between frames or fields of the input image signal to convert the number of frames or fields of the input image signal when it is determined that the plurality of screens is combined.

A forty-third technical means is an image display method having the step of interpolating an image signal subjected to a motion compensation process between frames or fields of an input image signal to convert the number of frames or fields of the input image signal, comprising the steps of: determining whether a plurality of screens is combined for displaying a plurality of image signals; and varying compensation intensity of the motion compensation process when it is determined that the plurality of screens is combined.

### EFFECT OF THE INVENTION

According to the present invention, when displaying an image combining a plurality of screens (multi-screen display), the image quality deterioration in a screen boundary part due to an interpolation process through motion compensation can be prevented by matching a motion detection block boundary and a boundary of a plurality of screens.
The image quality deterioration in the screen boundary part can also be prevented by appropriately controlling a motion compensation process for the respective screen boundary parts of a plurality of screens.
When the multi-screen display is performed, the image quality deterioration of the display image can effectively be prevented by not executing the interpolation process through motion compensation.
Since one motion-compensation frame rate conversion circuit can process a plurality of screens, the image quality of multi-screen display images can effectively be improved with reduced cost.

### BRIEF DESCRIPTION OF THE DRAWINGS

[Fig. 1] Fig. 1 is a block diagram of an exemplary configuration of a motion-compensated frame rate converting portion included in an image display device of the present invention.
[Fig. 2] Fig. 2 is a view for explaining an example of an interpolation frame generating process of a frame generating portion.
[Fig. 3] Fig. 3 is a block diagram of an exemplary main configuration of a liquid crystal display device according to a first embodiment of the present invention.
[Fig. 4] Fig. 4 is a block diagram of an exemplary main configuration of a liquid crystal display device according to a second embodiment of the present invention.
[Fig. 5] Fig. 5 is a block diagram of an exemplary main configuration of a liquid crystal display device according to a third embodiment of the present invention.
[Fig. 6] Fig. 6 is a block diagram of a detailed configuration of a motion vector detecting portion according to the third embodiment of the present invention.
[Fig. 7] Fig. 7 is a block diagram of an exemplary main configuration of a liquid crystal display device according to a fourth embodiment of the present invention.
[Fig. 8] Fig. 8 is a block diagram of an exemplary main configuration of a liquid crystal display device according to a fifth embodiment of the present invention.
[Fig. 9] Fig. 9 is a block diagram of an exemplary main configuration of a liquid crystal display device according to a sixth embodiment of the present invention.
[Fig. 10] Fig. 10 is a block diagram of an exemplary main configuration of a liquid crystal display device according to a seventh embodiment of the present invention.
[Fig. 11] Fig. 11 is a block diagram of an exemplary main configuration of an FRC portion according to an eighth embodiment of the present invention.
[Fig. 12] Fig. 12 is a flowchart for explaining an example of an image display method by the image display device of the present invention.
[Fig. 13] Fig. 13 is a flowchart for explaining another example of the image display method by the image display device of the present invention.
[Fig. 14] Fig. 14 is a flowchart for explaining another example of the image display method by the image display device of the present invention.
[Fig. 15] Fig. 15 is a flowchart for explaining another example of the image display method by the image display device of the present invention.
[Fig. 16] Fig. 16 is a flowchart for explaining another example of the image display method by the image display device of the present invention.
[Fig. 17] Fig. 17 is a block diagram of an exemplary main configuration of a liquid crystal display device according to a ninth embodiment of the present invention.
[Fig. 18] Fig. 18 is a block diagram of an exemplary main configuration of a liquid crystal display device according to a tenth embodiment of the present invention.
[Fig. 19] Fig. 19 is a block diagram of an exemplary main configuration of a liquid crystal display device according to an eleventh embodiment of the present invention.
[Fig. 20] Fig. 20 is a view of a relationship between input data and output data according to the eleventh embodiment of the present invention.
[Fig. 21] Fig. 21 is a block diagram of an exemplary main configuration of a liquid crystal display device according to a twelfth embodiment of the present invention.
[Fig. 22] Fig. 22 is a view of a relationship between input data and output data according to the twelfth embodiment of the present invention.
[Fig. 23] Fig. 23 is a block diagram of an exemplary main configuration of a liquid crystal display device according to a thirteenth embodiment of the present invention.
[Fig. 24] Fig. 24 is a view of a relationship between input data and output data according to the thirteenth embodiment of the present invention.
[Fig. 25] Fig. 25 is a block diagram of an exemplary main configuration of a liquid crystal display device according to a fourteenth embodiment of the present invention.
[Fig. 26] Fig. 26 is a view of a relationship between input data and output data according to the fourteenth embodiment of the present invention.
[Fig. 27] Fig. 27 is a block diagram of an exemplary main configuration of an FRC portion according to a fifteenth embodiment of the present invention.
[Fig. 28] Fig. 28 is a flowchart for explaining an example of the image display method by the image display device of the present invention.
[Fig. 29] Fig. 29 is a flowchart for explaining another example of the image display method by the image display device of the present invention.
[Fig. 30] Fig. 30 is a flowchart for explaining another example of the image display method by the image display device of the present invention.
[Fig. 31] Fig. 31 is a block diagram of an outline configuration of an FRC drive display circuit in a conventional liquid crystal display device.
[Fig. 32] Fig. 32 is a view for explaining a frame rate conversion process by the conventional FRC drive display circuit shown in Fig. 31.
[Fig. 33] Fig. 33 is a view for explaining an interpolation frame generation process of a motion vector detecting portion and an interpolation frame generating portion.

### EXPLANATIONS OF REFERENCE NUMERALS

10, 100...frame rate converting (FRC) portion; 11...vector detecting portion; 11a...luminance signal extracting portion; 11b...preprocess filter; 11c...motion detection frame memory; 11d...initial vector memory; 11e, 101 ... motion vector detecting portion; 11f...interpolation vector evaluating portion; 12...frame generating portion; 12a...interpolation frame memory; 12b, 102...interpolation frame generating portion; 12c...time base conversion frame memory; 12d...time base converting portion; 12e...compensation intensity varying portion; 13...screen combining portion; 14, 104...electrode driving portion; 15, 103...liquid crystal display panel; 16...remote-control light-receiving portion; 17...controlling portion; 18...switching portion; 19...path; 20...linear interpolation processing portion; 21...memory; 22...switching portion; 23...zero vector; 24...black-level signal insert processing portion; 105...motion vector; 106...interpolation vector; and 107...interpolation frame.

### PREFERRED EMBODIMENTS OF THE INVENTION

Preferred embodiments of an image display device of the present invention will hereinafter be described with reference to the accompanying drawings. Although the present invention is applicable to either field signals and interpolation field signals or frame signals and interpolation frame signals, the frame signals and the interpolation frame signals will be described as a representative example since both (field and frame) are in a similar relationship to each other.

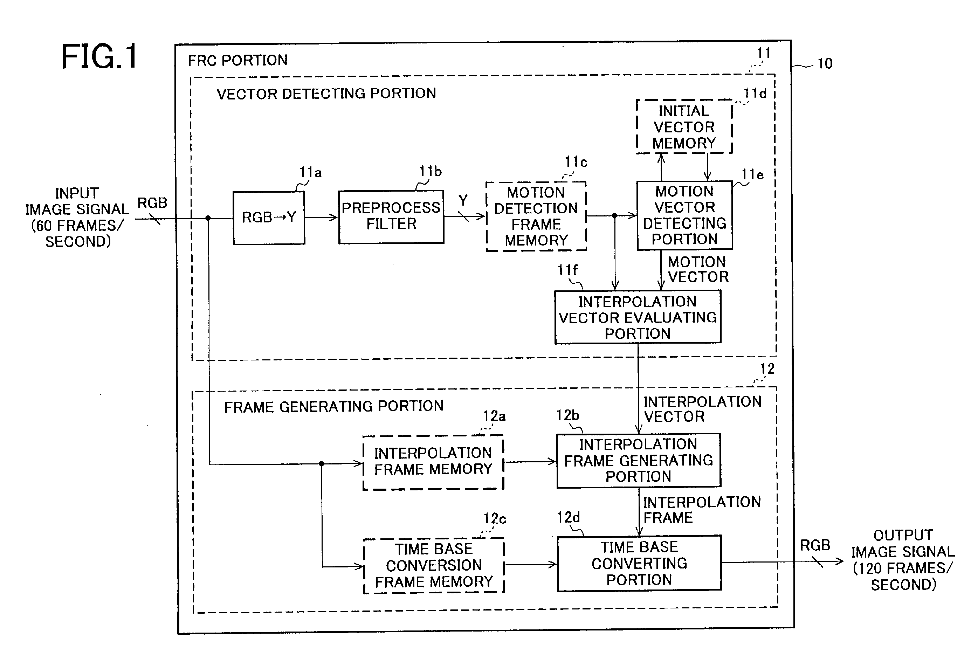

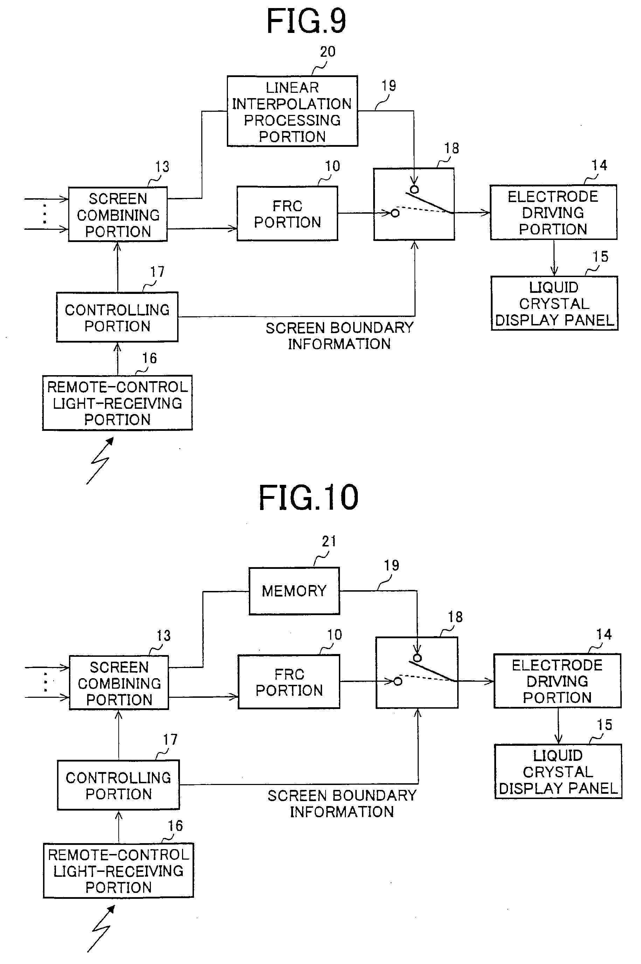

Fig. 1 is a block diagram of a configuration example of a motion-compensated frame rate converting portion included in the image display device of the present invention; in Fig. 1, 10 denotes a frame rate converting portion (hereinafter, FRC portion); and the FRC portion 10 corresponds to a rate converting means of the present invention and is made up of a vector detecting portion 11 that detects a motion vector between two consecutive frames included in an input image signal and a frame generating portion 12 that generates an interpolation frame (interpolation image) based on the detected motion vector. Although the iterative gradient method is used for the motion vector detection in the description of the vector detecting portion 11, the method is not limited to the iterative gradient method and may be the block matching method.

Since a feature of the iterative gradient method is that a motion vector can be detected for each block, several types of motion amounts can be detected, and a motion vector can be detected even from a moving object having a small region. The circuit configuration thereof can be realized in a smaller scale than other modes (such as the block matching method). In the iterative gradient method, an already detected motion vector of a neighboring block is defined as an initial deflection vector, which is used as a starting point to repeat calculations of the gradient method for a detected block. With this method, a substantially accurate motion amount can be acquired by repeating the gradient method about two times.

In Fig. 1, the vector detecting portion 11 includes a luminance signal extracting portion 11a that extracts a luminance signal (Y signal) from an input image signal (RGB signal), a preprocess filter 11b that restrains a high bandwidth by applying LPF to the extracted Y signal, a motion detection frame memory 11c, an initial vector memory 11d that accumulates initial vector candidates, a motion vector detecting portion 11e that detects motion vectors between frames with the use of the iterative gradient method, and an interpolation vector evaluating portion 11f that allocates an interpolation vector between the frames based on the detected motion vectors.

The FRC portion 10 corresponds to the rate converting means of the present invention; the motion vector detecting portion 11e corresponds to a motion vector detecting portion of the present invention; and the interpolation vector evaluating portion 11f corresponds to an interpolation vector allocating portion of the present invention.

Since a differential component of a pixel is used for the calculations of the above iterative gradient method, the method is easily affected by noises and calculation errors are increased if large gradient variations exist in a detected block, and therefore, the LPF is applied by the preprocess filter 11b to restrain the high bandwidth. In the initial vector memory 11d, motion vectors (initial vector candidates) already detected in a frame immediately before the previous frame are accumulated as initial vector candidates.

The motion vector detecting portion 11e selects a motion vector closest to the motion vector of the detected block for an initial vector from the initial vector candidates accumulated in the initial vector memory 11d. That is, the initial vector is selected by the block matching method from the already detected motion vectors (initial vector candidates) in neighboring blocks of the detected block. The motion vector detecting portion 11e uses the selected initial vector as a starting point to detect a motion vector between a previous frame and a current frame through the calculations of the gradient method.

The interpolation vector evaluating portion 11f evaluates the motion vectors detected by the motion vector detecting portion 11e, allocates an optimum interpolation vector to an interpolation block between frames based on the evaluation result, and outputs the vector to the frame generating portion 12.

The frame generating portion 12 includes an interpolation frame memory 12a that accumulates two input frames (previous frame and current frame), an interpolation frame generating portion 12b that generates an interpolation frame based on the two input frames from the interpolation frame memory 12a and the interpolation vector from the interpolation vector evaluating portion 11f, a time base conversion frame memory 12c for accumulating the input frames (previous frame and current frame), and a time base converting portion 12d that inserts the interpolation frame from the interpolation frame generating portion 12b into the input frames from the time base conversion frame memory 12c to generate an output image signal (RGB signal).

The interpolation frame generating portion 12b corresponds to an interpolation image generating portion of the present invention and the time base converting portion 12d corresponds to an image interpolating portion of the present invention.

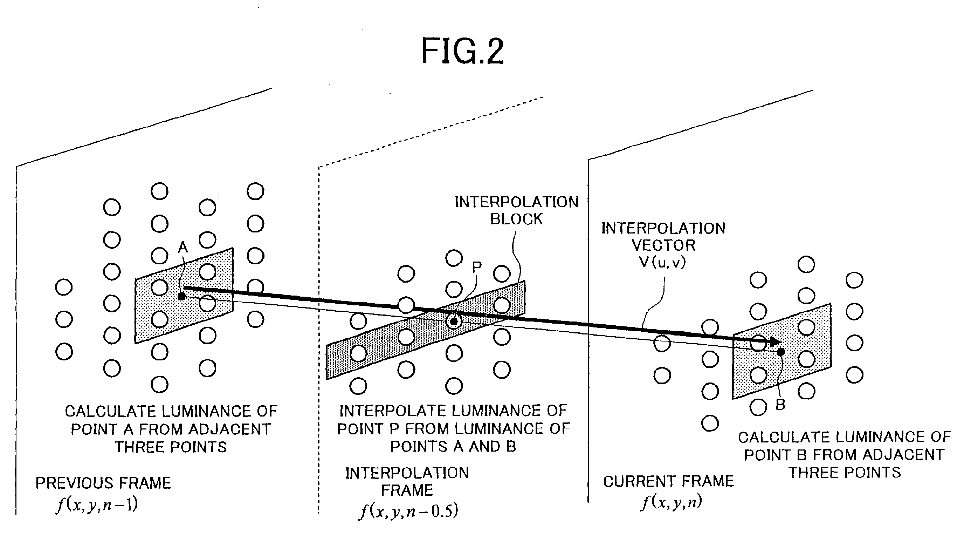

Fig. 2 is a diagram for explaining an example of the interpolation frame generating process of the frame generating portion 12. The interpolation frame generating portion 12b stretches an interpolation vector V allocated to the interpolation block into the previous frame and the current frame and uses pixels located adjacent to the intersecting points with the frames to interpolate the pixels in the interpolation block. For example, in the previous frame, the luminance of a point A is calculated from three adj acent points. In the current frame, the luminance of a point B is calculated from three adjacent points. In the interpolation frame, the luminance of a point P is interpolated using the luminance of the points A and B. The luminance of the point P may be an average of the luminance of the point A and the luminance of the point B, for example.

The interpolation frame generated as above is sent to the time base converting portion 12d. The time base converting portion 12d sandwiches the interpolation frame between the previous frame and the current frame to perform a process of converting a frame rate. In this way, the FRC portion 10 can convert the input image signal (60 frames/sec) into a motion-compensated output image signal (120 frames/sec), which can be output to a display panel to reduce the motion blur and improve the moving image quality. Although the 60-frame/sec input image signal is converted into the 120-frame/sec output image signal in the frame rate conversion of this description, this is obviously applicable to the case of acquiring 90-frame/sec and 180-frame/sec output image signals, for example.

The image display device of the present invention includes the FRC portion 10 shown in Fig. 1 and the main object thereof is to prevent the image quality deterioration in a screen boundary part due to the FRC process when displaying an image combining a plurality of screens. Although the present invention is applicable to general image display devices having the hold-type display characteristics such as liquid crystal displays, organic EL displays, and electrophoretic displays, a representative example described in the following embodiments will be the case of applying the present invention to a liquid crystal display device using a liquid crystal display panel for a display panel.

### (First Embodiment)

In a first embodiment of the present invention, when displaying an image combining a plurality of screens, the image quality deterioration in a screen boundary part is prevented by matching a motion detection block boundary and a boundary of a plurality of screens.

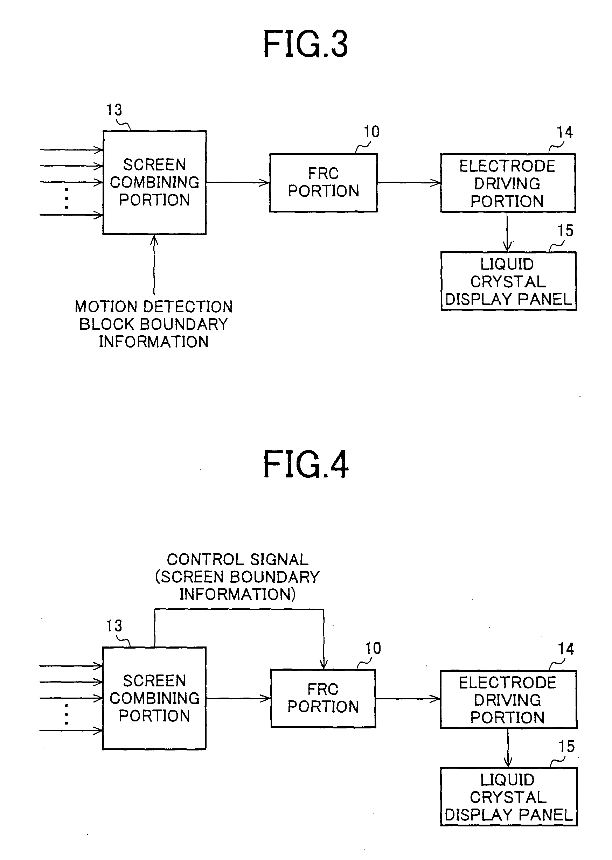

Fig. 3 is a block diagram of an exemplary main configuration of a liquid crystal display device according to the first embodiment of the present invention and the liquid crystal display device includes the FRC portion 10, a screen combining portion 13, an electrode driving portion 14, and a liquid crystal display panel 15. These portions are connected to a controlling portion not shown and is operated in accordance with instructions from the controlling portion.

The screen combining portion 13 is a means of combining a plurality of images to generate a multi-screen image and is disposed on the preceding stage of the FRC portion 10. The screen combining portion 13 is disposed on the preceding stage because if disposed on the subsequent stage of the FRC portion 10, the clock operation must be accelerated in proportion to the frame rate increased by the FRC. This is not practical from the viewpoint of the cost since a chipset for supporting the accelerated clock operation is needed in this case.

The liquid crystal display panel 15 is an active-matrix liquid crystal display that has a liquid crystal layer and electrodes for applying scan signals and data signals to the liquid crystal layer. The electrode driving portion 14 is a display driver for driving the scan electrodes and the data electrodes of the liquid crystal display panel 15 based on the image signal subjected to the frame rate conversion by the FRC portion 10.

The screen combining portion 13 inputs a plurality of image signals to combine screens for displaying desired image signals on a plurality of screens. This screen combining process is controlled in accordance with instruction operations performed by a user with the use of a remote control device (remote controller), for example. Motion detection block boundary information is input from the controlling portion not shown. The motion detection block boundary information is information for notifying that the motion vector detection process is executed in the FRC portion 10 for each of eight-by-eight pixel blocks. The screen combining portion 13 controls the combining positions of a plurality of screens based on the motion detection block boundary information. That is, the respective screen boundaries of a plurality of screens to be combined are matched with the motion detection block (namely, eight-by-eight pixel block) boundaries to combine a plurality of screens. The combined image from the screen combining portion 13 is subjected to the motion-compensated interpolation process by the FRC portion 10 and is displayed and output from the liquid crystal display panel 15.

Since the motion detection block boundaries are matched with the boundaries of a plurality of screens as above when displaying an image combining a plurality of screens, erroneous motion vectors are no longer detected between different adjacent screens and the image quality deterioration can effectively be prevented in the screen boundary part.

### (Second Embodiment)

In a second embodiment of the present invention, when a plurality of images is combined to perform the multi-screen display, the image quality deterioration is prevented in the screen boundary part by controlling a motion compensation process of the FRC portion 10 for the screen boundary part based on screen boundary information for distinguishing each of a plurality of screens.

Fig. 4 is a block diagram of an exemplary main configuration of a liquid crystal display device according to the second embodiment of the present invention and the liquid crystal display device includes the FRC portion 10, the screen combining portion 13, the electrode driving portion 14, and the liquid crystal display panel 15. These portions are connected to the controlling portion not shown and is operated in accordance with instructions from the controlling portion.

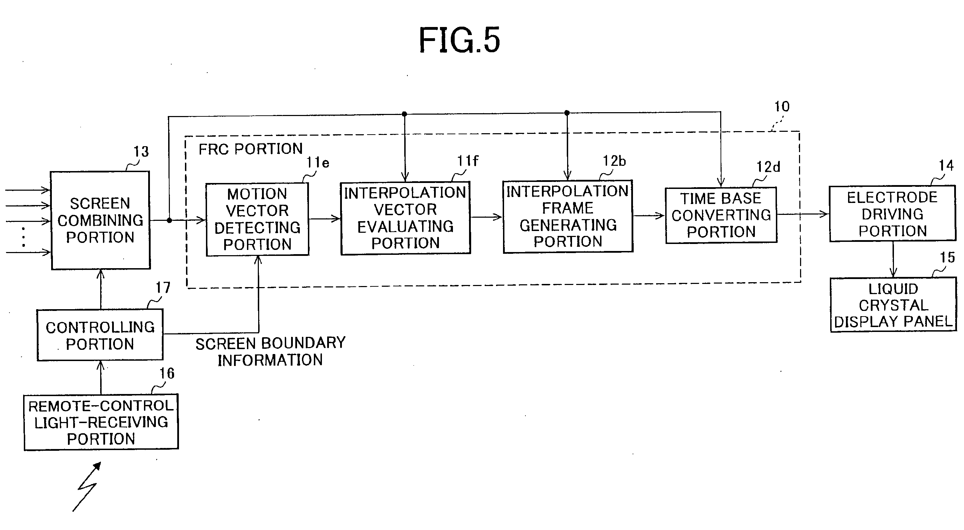

The screen combining portion 13 combines screens to display a plurality of screens for a plurality of image signals and outputs an image signal generated by combining screens to the FRC portion 10. The FRC portion 10 acquires screen boundary information indicating respective boundary positions of a plurality of screens combined by the screen combining portion 13 (i.e., position information of the screen boundary part) and controls the motion compensation process for the respective screen boundary parts of a plurality of screens based on the screen boundary information such that the interpolation images are not collapsed. That is, the motion compensation process for the screen boundary part is differentiated from the motion compensation process for other parts. A specific example of the second embodiment will be described with reference to the following Figs. 5 to 8.

### (Third Embodiment)

In a third embodiment of the present invention, when a plurality of images is combined to perform the multi-screen display, the image quality deterioration is prevented in the screen boundary part by controlling a motion vector detecting portion 11e of the FRC portion 10 for the screen boundary part based on screen boundary information for distinguishing each of a plurality of screens.

Fig. 5 is a block diagram of an exemplary main configuration of a liquid crystal display device according to the third embodiment of the present invention and the liquid crystal display device includes the FRC portion 10, the screen combining portion 13, the electrode driving portion 14, the liquid crystal display panel 15, the remote-control light-receiving portion 16, and the controlling portion 17, and the FRC portion 10 includes the motion vector detecting portion 11e, an interpolation vector evaluating portion 11f, an interpolation frame generating portion 12b, and a time base converting portion 12d.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the motion vector detecting portion 11e the screen boundary information indicating respective boundary positions of a plurality of screens combined by the screen combining portion 13. The motion vector detecting portion 11e avoids detecting a motion vector or selecting an initial vector having a value crossing the boundary of screens for each of a plurality of screens based on the screen boundary information from the controlling portion 17. Any one of these operations may be performed or a plurality of the operations may be combined and performed. If no vector exists as a target other than vectors crossing the screen boundary, a zero vector is selected. The motion vector in the screen boundary part may forcibly be replaced with a zero vector and output.

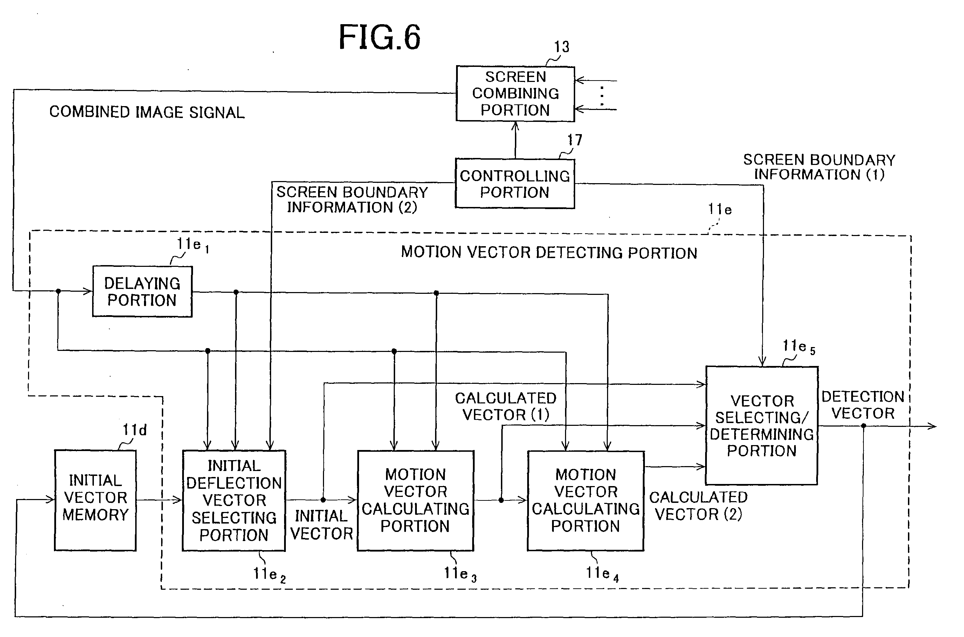

Fig. 6 is a block diagram of a detailed configuration of the motion vector detecting portion 11e according to the third embodiment of the present invention, and the motion vector detecting portion 11e includes a delaying portion 11e₁, an initial deflection vector selecting portion 11e₂, a motion vector calculating portion 11e₃, a motion vector calculating portion 11e₄, and a vector selecting/determining portion 11e₅.

With regard to the input image signal, a previous frame and a current frame delayed by the delaying portion 11e₁ for one frame period are input to the initial deflection vector selecting portion 11e₂, the motion vector calculating portion 11e₃, and the motion vector calculating portion 11e₄. The initial vector candidates are accumulated in the initial vector memory 11d.

The initial deflection vector selecting portion 11e₂ selects a motion vector closest to the motion vector of the detected block for an initial vector from the initial vector candidates accumulated in the initial vector memory 11d. That is, the initial vector is selected by the block matching method from the already detected motion vectors (initial vector candidates) in neighboring blocks of the detected block. The motion vector calculating portion 11e₃ and the motion vector calculating portion 11e₄ calculate vector values with the gradient method. These vector values are referred to as a calculated vector (1) and a calculated vector (2).

The vector selecting/determining portion 11e₅ obtains motion vector candidates based on the initial vector, the calculated vector (1), and the calculated vector (2) obtained as above. The optimum motion vector is selected and determined as the detected vector among a plurality of motion vector candidates.

The controlling portion 17 outputs screen boundary information (1) to the vector selecting/determining portion 11e₅ and outputs screen boundary information (2) to the initial deflection vector selecting portion 11e₂. The screen boundary information (1) and the screen boundary information (2) are the same information and differentiated for convenience of description. Although the screen boundary information is output to both the vector selecting/determining portion 11e₅ and the initial deflection vector selecting portion 11e₂, the information may be output to only one of the portions.

When determining the initial vector, the initial deflection vector selecting portion 11e₂ avoids defining the initial vector memory contents located at a position crossing the boundary of screens as candidates of the initial vector based on the screen boundary information (2). The initial deflection vector selecting portion 11e₂ also avoids selecting the initial vector having a value crossing the screen boundary. When determining the detected vector, the vector selecting/determining portion 11e₅ avoids selecting the motion vector having a value crossing the screen boundary based on the screen boundary information (1). In each case, if no vector exists as a target other than vectors crossing the screen boundary, a zero vector is selected. The motion vector in the screen boundary part may forcibly be replaced with a zero vector and output based on the screen boundary information (2).

As above, at the time of the normal moving image display (single-screen display), the moving image quality can be improved through the motion-compensated FRC process, and when displaying a plurality of image signals through the multi-screen combination, the collapse of the interpolation images due to the motion-vector detection errors, the motion-compensation errors, etc., between different screens can be constrained and the image quality deterioration due to the motion-compensated FRC process can be prevented in the screen boundary part by appropriately controlling the motion vector detecting portion 11e of the FRC portion 10 for the screen boundary part based on the screen boundary information for distinguishing each of a plurality of screens.

### (Fourth Embodiment)

In a fourth embodiment of the present invention, when a plurality of images is combined to perform the multi-screen display, the image quality deterioration is prevented in the screen boundary part by controlling the interpolation vector evaluating portion 11f of the FRC portion 10 for the screen boundary part based on screen boundary information for distinguishing each of a plurality of screens.

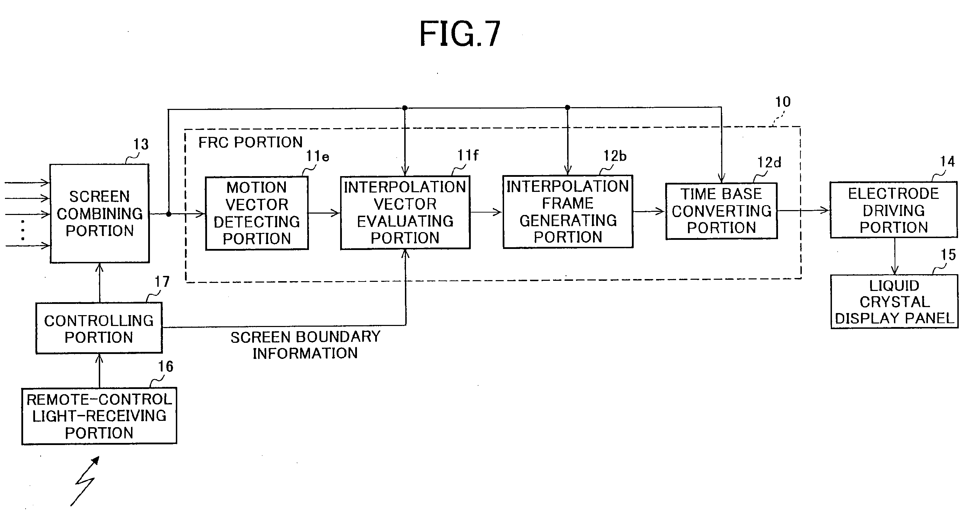

Fig. 7 is a block diagram of an exemplary main configuration of a liquid crystal display device according to the fourth embodiment of the present invention and the liquid crystal display device includes the FRC portion 10, the screen combining portion 13, the electrode driving portion 14, the liquid crystal display panel 15, the remote-control light-receiving portion 16, and the controlling portion 17, and the FRC portion 10 includes the motion vector detecting portion 11e, the interpolation vector evaluating portion 11f, the interpolation frame generating portion 12b, and the time base converting portion 12d.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the interpolation vector evaluating portion 11f the screen boundary information indicating respective boundary positions of a plurality of screens combined by the screen combining portion 13. The interpolation vector evaluating portion 11f forces the interpolation vector of the interpolation block including the screen boundary part to be a zero vector for each of a plurality of screens based on the screen boundary information from the controlling portion 17. The interpolation vector evaluating portion 11f also avoids evaluating the motion vector having a value crossing the screen boundary. Either one of the two methods can be performed.

When the interpolation vector of the interpolation block is set to a zero vector, the controlling portion 17 adds flag information to the interpolation block including the screen boundary part. This flag information is a flag for avoiding using the interpolation vector of the interpolation block, and the output is controlled to be a zero vector for the interpolation vector of the interpolation block with the flag information added. By setting the interpolation vector to a zero vector in the screen boundary part in this way, the motion-compensated interpolation can be disabled in the screen boundary part.

As above, at the time of the normal moving image display (single-screen display), the moving image quality can be improved through the motion-compensated FRC process, and when displaying a plurality of image signals through the multi-screen combination, the collapse of the interpolation images due to the motion-compensation errors, etc., between different screens can be constrained and the image quality deterioration due to the motion-compensated FRC process can be prevented in the screen boundary part by appropriately controlling the interpolation vector evaluating portion 11f of the FRC portion 10 for the screen boundary part based on the screen boundary information for distinguishing each of a plurality of screens.

### (Fifth Embodiment)

In a fifth embodiment of the present invention, when a plurality of images is combined to perform the multi-screen display, the image quality deterioration is prevented in the screen boundary part by controlling the interpolation frame generating portion 12b of the FRC portion 10 for the screen boundary part based on screen boundary information for distinguishing each of a plurality of screens.

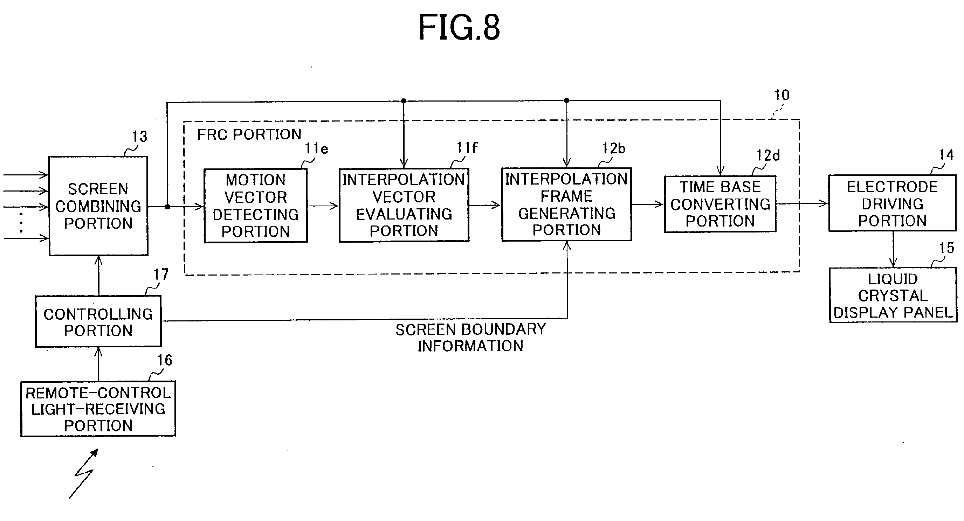

Fig. 8 is a block diagram of an exemplary main configuration of a liquid crystal display device according to the fifth embodiment of the present invention and the liquid crystal display device includes the FRC portion 10, the screen combining portion 13, the electrode driving portion 14, the liquid crystal display panel 15, the remote-control light-receiving portion 16, and the controlling portion 17, and the FRC portion 10 includes the motion vector detecting portion 11e, the interpolation vector evaluating portion 11f, the interpolation frame generating portion 12b, and the time base converting portion 12d.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the interpolation frame generating portion 12b the screen boundary information indicating respective boundary positions of a plurality of screens combined by the screen combining portion 13. The interpolation frame generating portion 12b forces the interpolation vector of the interpolation block including the screen boundary part to be a zero vector for each of a plurality of screens based on the screen boundary information from the controlling portion 17 to generate the interpolation images. As is the case with the fourth embodiment, by setting the interpolation vector to a zero vector in the screen boundary part in this way, the motion-compensated interpolation can be disabled in the screen boundary part.

As above, at the time of the normal moving image display (single-screen display), the moving image quality can be improved through the motion-compensated FRC process, and when displaying a plurality of image signals through the multi-screen combination, the collapse of the interpolation images due to the motion-compensation errors, etc., between different screens can be constrained and the image quality deterioration due to the motion-compensated FRC process can be prevented in the screen boundary part by appropriately controlling the interpolation frame generating portion 12b of the FRC portion 10 for the screen boundary part based on the screen boundary information for distinguishing each of a plurality of screens.

### (Sixth Embodiment)

In a sixth embodiment of the present invention, a linear interpolation processing portion is provided on a path other than the input path to the FRC portion 10, and when a plurality of images is combined to perform the multi-screen display, the output for the screen boundary part is switched to the linear interpolation processing portion side to interpolate the image signals subjected to the linear interpolation only in the screen boundary part based on the screen boundary information for distinguishing each of a plurality of screens. That is, for the boundary part where the combined screens are adjoined, the switching is performed such that the frame rate conversion is performed by executing the linear interpolation process instead of the interpolation process through motion compensation.

Fig. 9 is a block diagram of an exemplary main configuration of a liquid crystal display device according to the sixth embodiment of the present invention and the liquid crystal display device includes the FRC portion 10, the screen combining portion 13, the electrode driving portion 14, the liquid crystal display panel 15, the remote-control light-receiving portion 16, the controlling portion 17, a switching portion 18, a path 19 provided separately from the input path to the FRC portion 10, and a linear interpolation processing portion 20 on the path 19. The switching portion 18 is disposed on the subsequent stage of the FRC portion 10 and switches whether the image signal (motion-compensated image) from the FRC portion 10 is output or the image signal (linear interpolation image) from the linear interpolation processing portion 20 is output in accordance with the screen boundary information from the controlling portion 17.

That is, the switching portion 18 is switched to the path 19 (the linear interpolation processing portion 20) side for the screen boundary part based on the screen boundary information from the controlling portion 17 to control such that the display image signal generated by interpolating the image signal subjected to the linear interpolation process between the frames of the input image signal is output to the liquid crystal display panel 15. The linear interpolation processing portion 20 inputs the input image signal and executes a process of inserting the interpolation frame subjected to the linear interpolation process into the screen boundary part of the input image signal. For regions other than the screen boundary part, the switching portion 18 is switched to the FRC portion 10 side to output to the liquid crystal display panel 15 the display image signal subjected to the FRC process (motion-compensated frame interpolation process) between the frames of the input image signal.

In the linear interpolation process, as described in above non-patent document 2, an interpolation frame is acquired through linear interpolation using a frame interpolation ratio α from the signal of the previous frame and the signal of the current frame.

When displaying a plurality of image signals through the multi-screen combination, the image quality deterioration due to the motion-compensated FRC process can effectively be prevented in the screen boundary part by not performing the interpolation process through motion compensation for the screen boundary part based on the screen boundary information for distinguishing each of a plurality of screens.

### (Seventh Embodiment)

In a seventh embodiment of the present invention, a memory is provided on a path other than the input path to the FRC portion 10, and when a plurality of images is combined to perform the multi-screen display, the output for the screen boundary part is switched to the memory side to convert the frame rate by rapidly and repeatedly reading the image signal of the same frame from the memory more than once only for the screen boundary part based on the screen boundary information for distinguishing each of a plurality of screens. That is, for the boundary part where the combined screens are adjoined, the switching is performed such that the input image signal is rapidly and sequentially output to convert the frame rate and is displayed and output on the liquid crystal display panel 15 without performing the interpolation process through motion compensation.

Fig. 10 is a block diagram of an exemplary main configuration of a liquid crystal display device according to the seventh embodiment of the present invention and the liquid crystal display device includes the FRC portion 10, the screen combining portion 13, the electrode driving portion 14, the liquid crystal display panel 15, the remote-control light-receiving portion 16, the controlling portion 17, the switching portion 18, the path 19 provided separately from the input path to the FRC portion 10, and a memory 21 on the path 19. The switching portion 18 is disposed on the subsequent stage of the FRC portion 10 and switches whether the image signal (motion-compensated image) from the FRC portion 10 is output or the image signal of the previous frame or the subsequent frame from the memory 21 is output in accordance with the screen boundary information from the controlling portion 17.

That is, the switching portion 18 is switched to the path 19 (the memory 21) side for the screen boundary part based on the screen boundary information from the controlling portion 17 to control such that the display image signal generated by repeatedly reading and inserting the image signal of the previous frame or the subsequent frame from the memory 21 between the frames of the input image signal is output to the liquid crystal display panel 15. The memory 21 has the input image signal accumulated thereon and the input image signal is repeatedly read. For regions other than the screen boundary part, the switching portion 18 is switched to the FRC portion 10 side to output to the liquid crystal display panel 15 the display image signal subjected to the FRC process (motion-compensated frame interpolation process) between the frames of the input image signal.

When displaying a plurality of image signals through the multi-screen combination, the image quality deterioration due to the motion-compensated FRC process can effectively be prevented in the screen boundary part by not performing the interpolation process through motion compensation for the screen boundary part based on the screen boundary information for distinguishing each of a plurality of screens.

### (Eighth Embodiment)

In an eighth embodiment of the present invention, when a plurality of images is combined to perform the multi-screen display, the compensation intensity of the motion compensation process can be varied in the interpolation frame generating portion for the screen boundary part based on the screen boundary information for distinguishing each of a plurality of screens. Specifically, the interpolation frame generating portion is included that performs weighted addition of the image signal subjected to the motion compensation process and the image signal subjected to the linear interpolation process at a predetermined rate to generate an interpolation frame, and the weighted addition rate can be varied for the screen boundary part where the combined screens are adjoined.

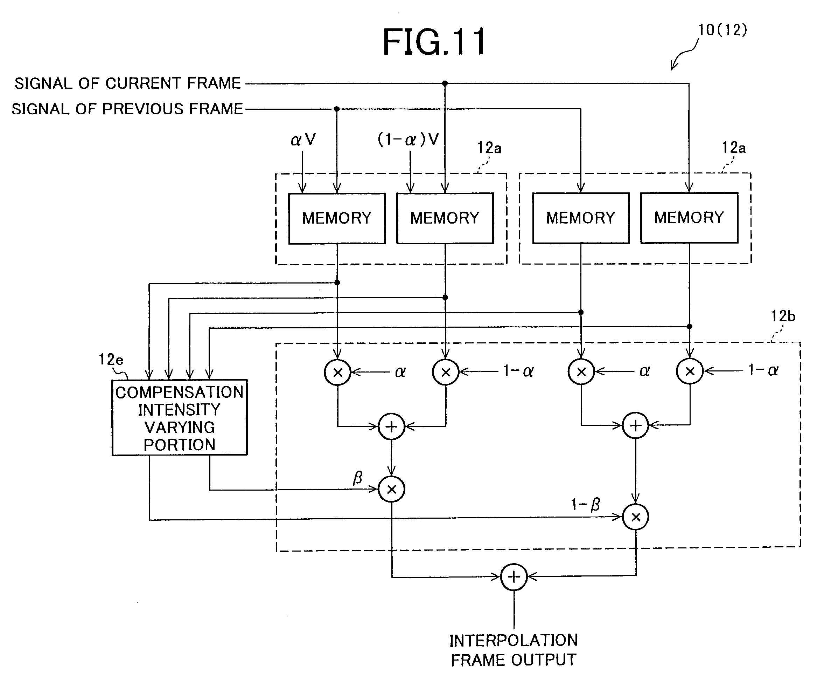

Fig. 11 is a block diagram of an exemplary main configuration of the FRC portion 10 according to the eighth embodiment of the present invention, and the frame generating portion 12 of the FRC portion 10 includes the interpolation frame memory 12a, the interpolation frame generating portion 12b, and a compensation intensity varying portion 12e that can vary the compensation intensity of the motion compensation process in the FRC portion 10. In Fig. 11, V denotes an interpolation vector; α denotes a frame interpolation ratio; and β denotes interpolation intensity (weighted addition rate).

Generally, known methods of the frame interpolation process include the frame interpolation through the linear interpolation between two frames and the frame interpolation using motion vectors (motion compensated interpolation). In the former case, an interpolation frame is acquired by performing the linear interpolation from the signal of the previous frame and the signal of the current frame at a frame interpolation ratio α.

On the other hand, to acquire an interpolation frame from the previous frame and the current frame in the latter case, the interpolation vector V is detected from the motion vectors between the previous frame image and the current frame image, and the interpolation frame is acquired from the weighted addition of a signal of the previous frame image shifted by a degree of αV obtained by dividing the value (interpolation vector V) by the frame interpolation ratio α and a signal of the current frame image shifted by (1-α)V. Although good image quality can be acquired without deteriorating the resolution since a moving image itself is captured and motion-compensated by using this motion-compensated interpolation, the image quality may be deteriorated in the multi-screen display video due to this process.

Therefore, in this embodiment, the compensation intensity varying portion 12e is provided in the frame generating portion 12. The compensation intensity varying portion 12e varies the weighted addition rate β for the screen boundary part. The weighted addition rate β is a rate for performing the weighted addition of the image signal subjected to the motion compensation process and the image signal subjected to the linear interpolation process. The interpolation frame generating portion 12b of this embodiment performs the weighted addition of the linear interpolation and the motion-compensated interpolation for the screen boundary part in accordance with the weighted addition rate β to generate the interpolation frame.

For example, the compensation intensity varying portion 12e sets the weighted addition rate β=0 for the screen boundary part and defines the image signal subjected to the linear interpolation process as the interpolation frame to prevent the image quality deterioration in the screen boundary part. The weighted addition rate β=1 is set for regions other than the screen boundary part to define the image signal subjected to the motion compensation process as the interpolation frame to achieve good image quality for the moving image.

Since the weighted addition rate β can arbitrarily and variably be set, the rate may be set to a substantially intermediate value between zero and one. This enables control to be performed such that the image quality of the screen boundary part is not deteriorated while performing the motion compensation in the interpolation frame image, and this can appropriately improve both the image quality deterioration due to the motion blur and the image quality deterioration in the screen boundary part of the multi-screen display. The compensation intensity varying process in the FRC portion 10 may be performed with either the method for each pixel or the method for each block (region).

When displaying a plurality of image signals through the multi-screen combination, since the compensation intensity can be varied (weakened) in the motion compensation process in the FRC for the screen boundary part based on the screen boundary information for distinguishing each of a plurality of screens, the image quality deterioration due to the motion-compensated FRC process can effectively be constrained in the screen boundary part by reducing the effects of the motion-vector detection errors, the motion compensation errors, etc., between different screens.

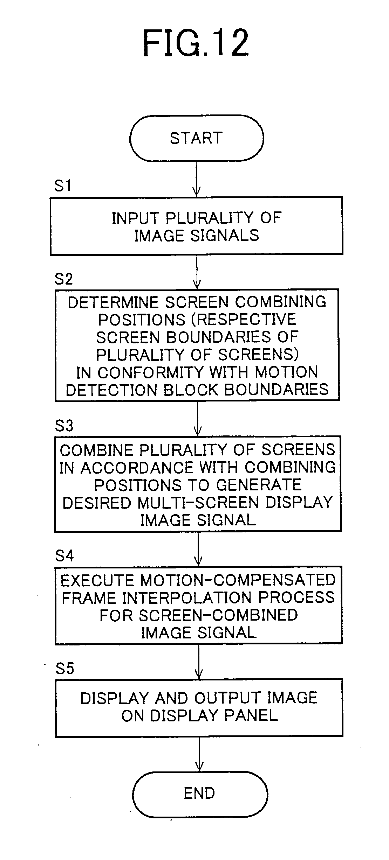

Fig. 12 is a flowchart for explaining an example of an image display method by the image display device of the present invention. An example of the image display method in the first embodiment will be described here. First, the screen combining portion 13 included in the image display device inputs a plurality of image signals (step S1), determines the screen combining positions (respective screen boundaries of a plurality of screens) in conformity with the motion detection block boundaries (step S2), and combines a plurality of screens in accordance with the combining positions to generate a desired multi-screen display image signal (step S3). The FRC portion 10 then executes the motion-compensated frame interpolation process for the screen-combined image signal (step S4) and displays and outputs an image on the liquid crystal display panel 15 (step S5).

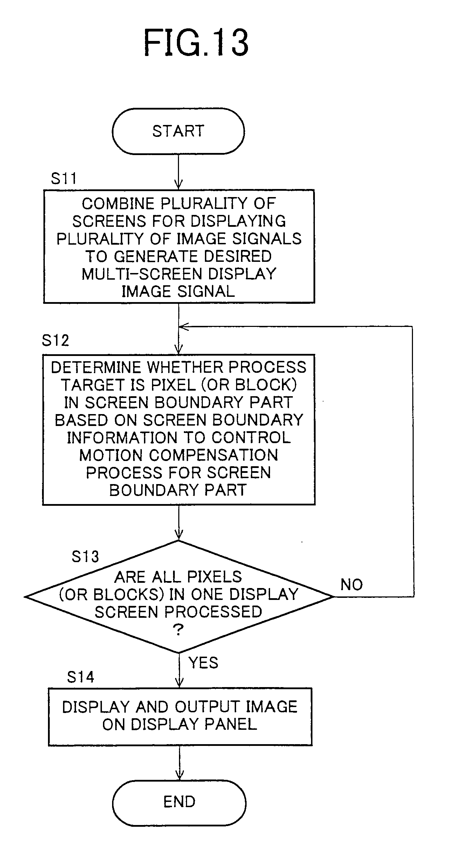

Fig. 13 is a flowchart for explaining another example of the image display method by the image display device of the present invention. An example of the image display method in the second to fifth embodiments will be described here. First, the screen combining portion 13 included in the image display device combines a plurality of screens for displaying a plurality of image signals in accordance with the control signal from the controlling portion 17 to generate a desired multi-screen display image signal (step S11). The FRC portion 10 determines whether a process target is a pixel (or block) in the screen boundary part of a plurality of screens combined by the screen combining portion 13 based on the screen boundary information from the controlling portion 17 and controls the motion compensation process for the screen boundary part to prevent the collapse of the interpolation images due to the motion-vector detection errors and the motion-compensation errors (step S12).

The control of the motion compensation process can be performed by applying a method such as controlling any one of the motion vector detecting portion 11e, the interpolation vector evaluating portion 11f, and the interpolation frame generating portion 12b included in the FRC portion 10 to avoid selecting the initial vector and/or motion vector crossing the screen boundary in the screen boundary part or to set the motion vector or interpolation vector to zero in the screen boundary part.

The image display device then determines whether all the pixels (or blocks) in one display screen are processed (step S13) and if the process is completed (in the case of YES), the image is displayed and output on the liquid crystal display panel 15 (step S14). If the process is not completed at step S13 (in the case of NO), the flow goes back to step S12 to repeat the process. For the regions other than the screen boundary part, the FRC portion 10 executes the normal motion compensation process.

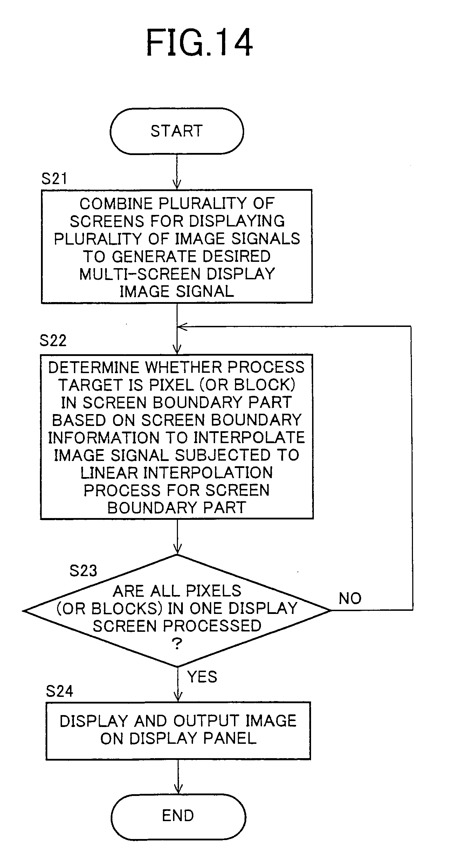

Fig. 14 is a flowchart for explaining another example of the image display method by the image display device of the present invention. An example of the image display method in the sixth embodiment will be described here. First, the screen combining portion 13 included in the image display device combines a plurality of screens for displaying a plurality of image signals in accordance with the control signal from the controlling portion 17 to generate a desired multi-screen display image signal (step S21) . The FRC portion 10 determines whether a process target is a pixel (or block) in the screen boundary part of a plurality of screens combined by the screen combining portion 13 based on the screen boundary information from the controlling portion 17 and performs control such that the image signal subjected to the linear interpolation process is interpolated in the screen boundary part (step S22).

The image display device then determines whether all the pixels (or blocks) in one display screen are processed (step S23) and if the process is completed (in the case of YES), the image is displayed and output on the liquid crystal display panel 15 (step S24). If the process is not completed at step S23 (in the case of NO), the flow goes back to step S22 to repeat the process. For the regions other than the screen boundary part, the FRC portion 10 executes the motion compensation process.

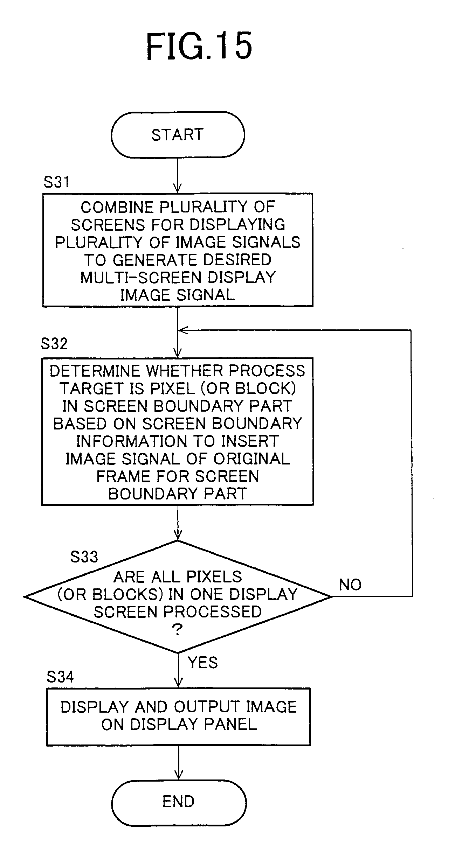

Fig. 15 is a flowchart for explaining another example of the image display method by the image display device of the present invention. An example of the image display method in the seventh embodiment will be described here. First, the screen combining portion 13 included in the image display device combines a plurality of screens for displaying a plurality of image signals in accordance with the control signal from the controlling portion 17 to generate a desired multi-screen display image signal (step S31). The FRC portion 10 determines whether a process target is a pixel (or block) in the screen boundary part of a plurality of screens combined by the screen combining portion 13 based on the screen boundary information from the controlling portion 17 and performs control such that the image signal of the original frame is inserted in the screen boundary part (step S32).

The image display device then determines whether all the pixels (or blocks) in one display screen are processed (step S33) and if the process is completed (in the case of YES), the image is displayed and output on the liquid crystal display panel 15 (step S34). If the process is not completed at step S33 (in the case of NO), the flow goes back to step S32 to repeat the process. For the regions other than the screen boundary part, the FRC portion 10 executes the motion compensation process.

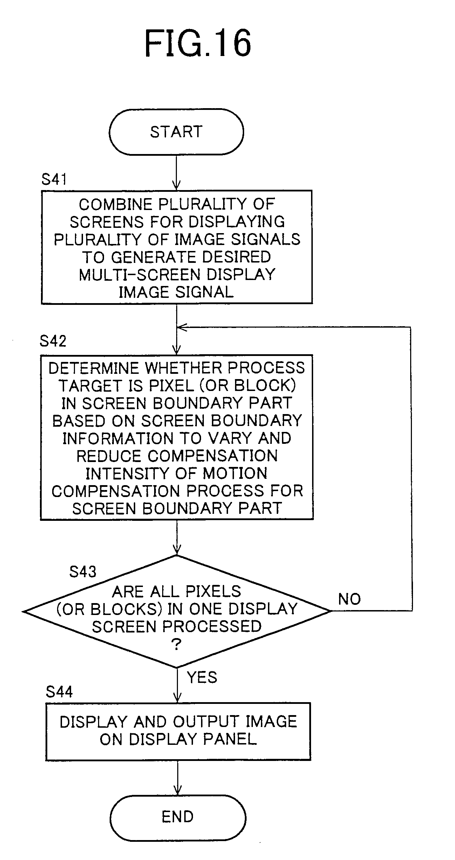

Fig. 16 is a flowchart for explaining another example of the image display method by the image display device of the present invention. An example of the image display method in the eighth embodiment will be described here. First, the screen combining portion 13 included in the image display device combines a plurality of screens for displaying a plurality of image signals in accordance with the control signal from the controlling portion 17 to generate a desired multi-screen display image signal (step S41). The FRC portion 10 determines whether a process target is a pixel (or block) in the screen boundary part of a plurality of screens combined by the screen combining portion 13 based on the screen boundary information from the controlling portion 17 and varies and reduce the compensation intensity of the motion compensation process for the screen boundary part (step S42).

The image display device then determines whether all the pixels (or blocks) in one display screen are processed (step S43) and if the process is completed (in the case of YES), the image is displayed and output on the liquid crystal display panel 15 (step S44). If the process is not completed at step S43 (in the case of NO), the flow goes back to step S42 to repeat the process. For the regions other than the screen boundary part, the compensation intensity is increased as usual in the motion compensation process of the FRC portion 10.

As described above, according to the present invention, when displaying an image combining a plurality of screens, the image quality deterioration in the screen boundary part due to the FRC process can be prevented by matching the motion detection block boundary and the boundary of a plurality of screens.
Since the motion compensation process can appropriately be controlled for the respective screen boundary parts of a plurality of screens, the image quality deterioration in the screen boundary part due to the FRC process can be prevented.
Since one FRC circuit can process a plurality of screens, the image quality of multi-screen display images can effectively be improved with reduced cost.

Although only the screen boundary part of a plurality of screens is subjected to a process, such as disabling the motion compensation process, different from that of other parts in the description of the above embodiments, the image quality deterioration due to the motion blur becomes less noticeable when the multi-screen display is performed since a display screen area per image is reduced. Therefore, when the multi-screen display is performed, the process such as disabling the motion compensation process may be executed for the entire screen, i.e., all the pixels (or blocks) in one display screen. Detailed description will hereinafter be made of embodiments of appropriately controlling the FRC process for the entire screen (entire area of the display screen) as above when a user gives instructions for the multi-screen display.

### (Ninth Embodiment)

In a ninth embodiment of the present invention, when a user gives instructions for the multi-screen display to combine and display a plurality of screens for displaying a plurality of image signals, the output of the motion vector detecting portion 11e is forced to be a zero vector to disable the motion compensation process of the FRC portion 10.

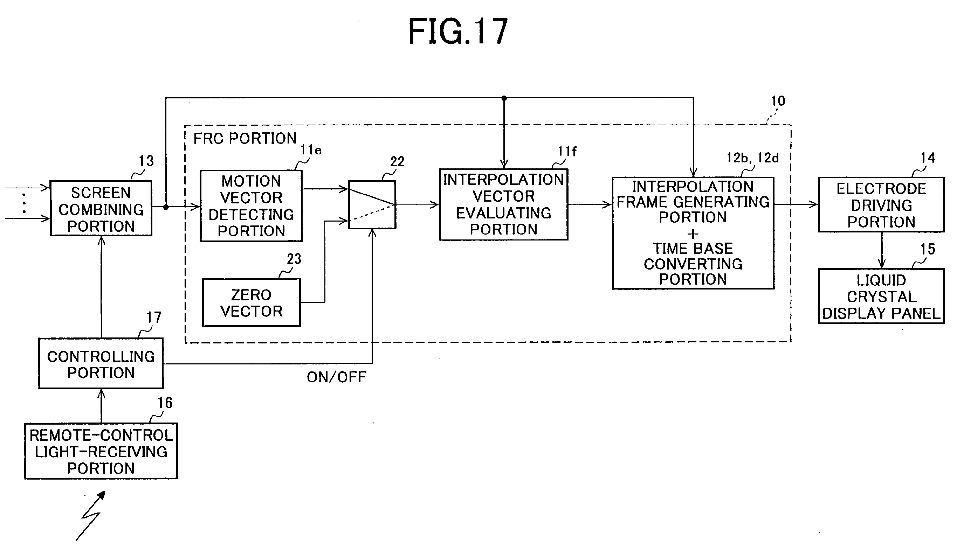

Fig. 17 is a block diagram of an exemplary main configuration of a liquid crystal display device according to the first embodiment of the present invention and the liquid crystal display device includes the FRC portion 10, the screen combining portion 13, the electrode driving portion 14, the liquid crystal display panel 15, the remote-control light-receiving portion 16, the controlling portion 17, and a switching portion 22. The switching portion 22 is disposed between the motion vector detecting portion 11e and the interpolation vector evaluating portion 11f within the FRC portion 10 and switches the motion vector from the motion vector detecting portion 11e to a zero vector 23 in accordance with the instruction from the controlling portion 17.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the switching portion 22 the multi-screen display ON/OFF information indicating that the multi-screen display is turned on/off. That is, the controlling portion 17 performs control such that the motion compensation process in the FRC portion 10 is disabled when a user gives instructions for the multi-screen display.

The drive frequency of the liquid crystal display panel 15 is a frame frequency converted by the FRC portion 10. Therefore, if an image signal input with a frame frequency of 60 Hz is converted by the FRC portion 10 into a frame frequency of 120 Hz, the drive frequency of the liquid crystal display panel 15 is 120 Hz. However, if the frame frequency conversion of the FRC process is not performed and the input image signal is directly displayed and output, the drive frequency of the liquid crystal display panel 15 is the frame frequency of the input image signal.

If a user gives instructions for the multi-screen display, the controlling portion 17 switches the switching portion 22 to the zero vector 23 side to forcibly replace the motion vector detected by the motion vector detecting portion 11e with the zero vector. If no instruction is given for the multi-screen display, the switching portion 22 is switched to the motion vector detecting portion 11e side, and the motion vector detected by the motion vector detecting portion 11e is input to the interpolation vector evaluating portion 11f.

As above, at the time of the normal single-screen display, the moving image quality can be improved through the motion-compensated FRC process, and when the multi-screen display is performed, the collapse of the interpolation images due to the motion-vector detection errors, the motion-compensation errors, etc., between different screens can be constrained and the image quality deterioration due to the motion-compensated FRC process can be prevented in the screen boundary part by setting the motion vector to the zero vector to disable the motion compensation process.

### (Tenth Embodiment)

In a tenth embodiment of the present invention, when a user gives instructions for the multi-screen display to combine and display a plurality of screens for displaying a plurality of image signals, the interpolation vector from the interpolation vector evaluating portion 11f is set to a zero vector to disable the motion compensation process of the FRC portion 10 such that no interpolation occurs between pixels at different positions.

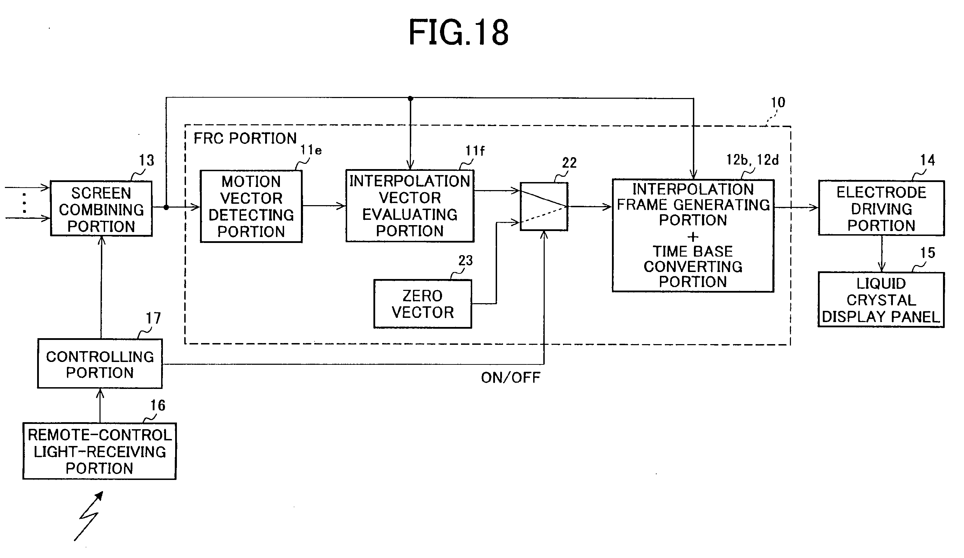

Fig. 18 is a block diagram of an exemplary main configuration of a liquid crystal display device according to the tenth embodiment of the present invention and the liquid crystal display device includes the FRC portion 10, the screen combining portion 13, the electrode driving portion 14, the liquid crystal display panel 15, the remote-control light-receiving portion 16, the controlling portion 17, and the switching portion 22. The switching portion 22 is disposed between the interpolation vector evaluating portion 11f and the interpolation frame generating portion 12b within the FRC portion 10 and switches the interpolation vector from the interpolation vector evaluating portion 11f to the zero vector 23 in accordance with the instruction from the controlling portion 17.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the switching portion 22 the multi-screen display ON/OFF information indicating that the multi-screen display is turned on/off. That is, the controlling portion 17 performs control such that the motion compensation process in the FRC portion 10 is disabled when a user gives instructions for the multi-screen display.

When a user gives instructions for the multi-screen display, the controlling portion 17 switches the switching portion 22 to the zero vector 23 side to set the interpolation vector allocated by the interpolation vector evaluating portion 11f to the zero vector. If no instruction is given for the multi-screen display, the switching portion 22 is switched to the interpolation vector evaluating portion 11f side, and the interpolation vector allocated by the interpolation vector evaluating portion 11f is input to the interpolation frame generating portion 12b.

As is the case with the ninth embodiment, when the multi-screen display is performed, the collapse of the interpolation images due to the motion-vector detection errors, the motion-compensation errors, etc., between different screens can be constrained and the image quality deterioration due to the motion-compensated FRC process can effectively be prevented by forcibly setting the interpolation vector to the zero vector to disable the motion compensation process.

### (Eleventh Embodiment)

In an eleventh embodiment of the present invention, a path is provided to bypass the FRC portion 10, and when a user gives instructions for the multi-screen display to combine and display a plurality of screens for displaying a plurality of image signals, the input image signal is input to the bypass path side to change the drive frequency of the liquid crystal display panel 15 in conformity with the frame frequency of the input image signal. That is, when performing the multi-screen display, the switching is performed such that the input image signal is directly displayed and output on the liquid crystal display panel 19 without performing the frame rate conversion.

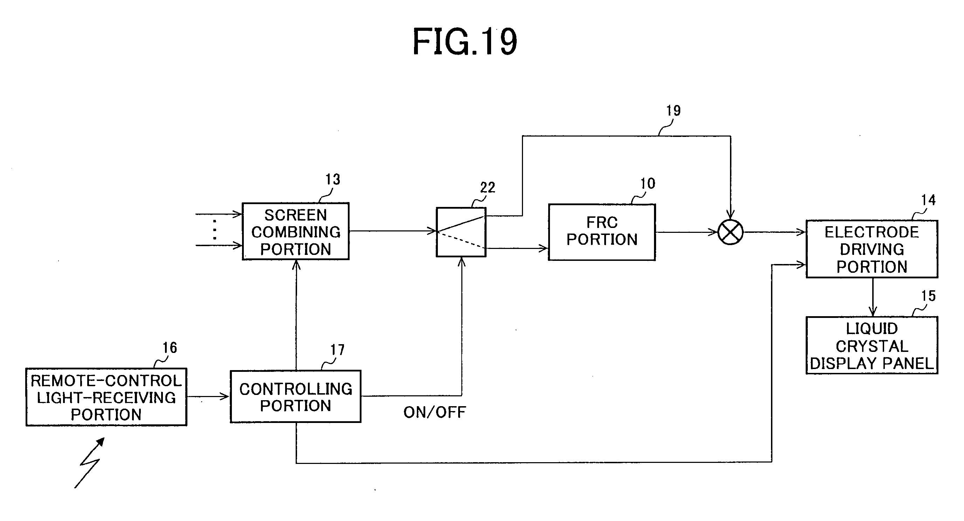

Fig. 19 is a block diagram of an exemplary main configuration of a liquid crystal display device according to the eleventh embodiment of the present invention and the liquid crystal display device includes the FRC portion 10, the screen combining portion 13, the electrode driving portion 14, the liquid crystal display panel 15, the remote-control light-receiving portion 16, the controlling portion 17, the switching portion 22, and the path 19 for bypassing the FRC portion 10. The switching portion 22 is disposed on the previous stage of the FRC portion 10 and switches whether the input image signal is input to the FRC portion 10 or input to the path 19 in accordance with the instruction from the controlling portion 17.

The remote-control light-receiving portion 16 receives and outputs a remote control signal transmitted from the remote controller (remote control device) not shown to the controlling portion 17. The controlling portion 17 analyzes the remote control signal received by the remote-control light-receiving portion 16 to control the portions in accordance with the operation instructions from a user. When a user gives instructions for the multi-screen display, the controlling portion 17 controls the screen combining portion 13 such that the desired number of image signals is combined for the multi-screen display.

The screen combining portion 13 combines screens to display a plurality of screens for a plurality of image signals and outputs an image signal generated by combining screens to the FRC portion 10. The controlling portion 17 outputs to the switching portion 22 the multi-screen display ON/OFF information indicating that the multi-screen display is turned on/off. That is, the controlling portion 17 performs control such that the original frame image signal is directly output when a user gives instructions for the multi-screen display.

If a user gives instructions for the multi-screen display, the controlling portion 17 switches the switching portion 22 to the path 19 side to bypass the FRC portion 10. If no instruction is given for the multi-screen display, the switching portion 22 is switched to the FRC portion 10 side to perform the FRC process (motion-compensated frame interpolation process) for the input image signal. The switching portion 22 may be disposed on the subsequent stage of the FRC portion 10 such that the output signal of the FRC portion 10 and the output signal of the path 19 are switched and output to the liquid crystal display panel 15.

In this embodiment, the controlling portion 17 can change the drive frequency of the liquid crystal display panel 15, and if instructions are given for the multi-screen display, the input image signal is input to the path 19 side to change the drive frequency of the liquid crystal display panel 15 in conformity with the frame frequency of the input image signal.

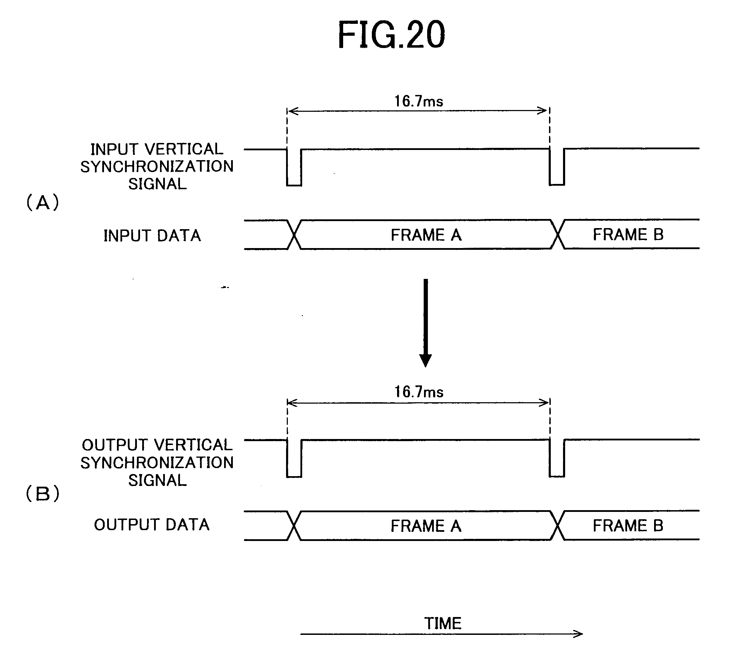

Fig. 20 is a view of a relationship between input data and output data according to the eleventh embodiment of the present invention. Fig. 20 (A) shows the input data to the path 19 and Fig. 20(B) shows the output data from the path 19. As shown in Fig. 20(A), if the input image signal (input data) is input to the path 19 with a frame frequency of 60 Hz, the display time per frame is about 16.7 ms. The controlling portion 17 controls the electrode driving portion 14, which is the display driver, to change the drive frequency of the liquid crystal display panel 15 from 120 Hz to 60 Hz and causes the input data to be output from the path 19 at 60 Hz without performing the frame rate conversion as shown in Fig. 20(B).

Since the liquid crystal display panel 15 displays the frame output from the path 19 without conversion of the number of frames at the drive frequency of 60 Hz, the display time per frame is still about 16.7 ms.

Therefore, the moving image quality can be improved by the motion-compensated FRC process at the time of the normal single-screen display and, since the frame rate conversion itself is prohibited by bypassing the FRC process when performing the multi-screen display, the image quality deterioration due to the motion-compensated FRC process can effectively be prevented.

### (Twelfth Embodiment)

In a twelfth embodiment of the present invention, a path is provided to bypass the FRC portion 10, and when a user gives instructions for the multi-screen display to combine and display a plurality of screens for displaying a plurality of image signals, the input image signal is input to the bypass path side to accumulate the input image signal in a memory on the path and the frame rate is converted by rapidly and repeatedly reading the image signal of the same frame from the memory more than once. That is, when performing the multi-screen display, the switching is performed such that the input image signal is rapidly and sequentially output to convert the frame rate and is displayed and output on the liquid crystal display panel 15 without performing the motion-compensated frame rate conversion.

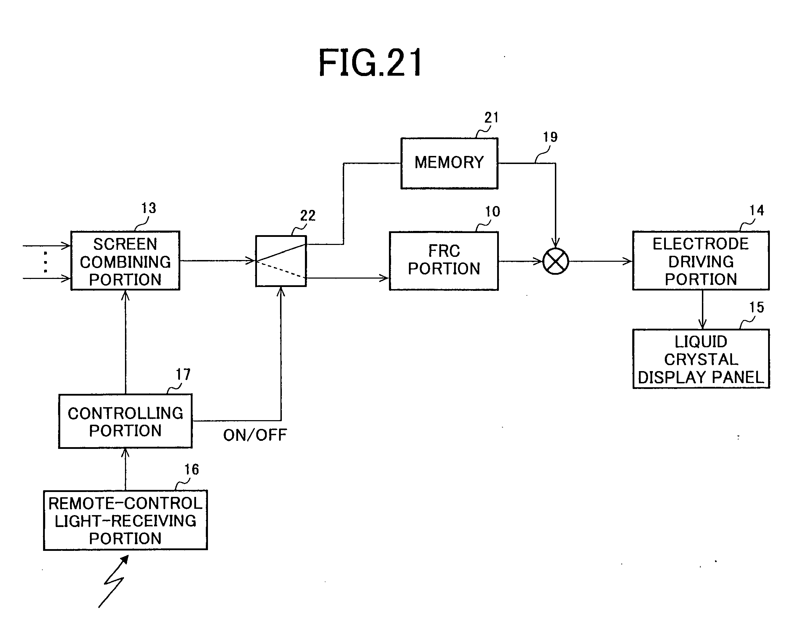

Fig. 21 is a block diagram of an exemplary main configuration of a liquid crystal display device according to the twelfth embodiment of the present invention and the liquid crystal display device includes the FRC portion 10, the screen combining portion 13, the electrode driving portion 14, the liquid crystal display panel 15, the remote-control light-receiving portion 16, the controlling portion 17, the switching portion 22, the path 19 for bypassing the FRC portion 10, and a memory 21 on the path 19. The switching portion 22 is disposed on the previous stage of the FRC portion 10 and switches whether the input image signal is input to the FRC portion 10 or input to the path 19 in accordance with the instruction from the controlling portion 17.

If a user gives instructions for the multi-screen display, the controlling portion 17 switches the switching portion 22 to the path 19 side to bypass the FRC portion 10 and to accumulate the input image signal in the memory 21. The frame insert process is subsequently performed by repeatedly reading the same frame from the memory 21 more than once. If no instruction is given for the multi-screen display, the switching portion 22 is switched to the FRC portion 10 side to perform the FRC process (motion-compensated frame interpolation process) for the input image signal. The switching portion 22 may be disposed on the subsequent stage of the FRC portion 10 such that the output signal of the FRC portion 10 and the output signal of the memory 21 are switched and output to the liquid crystal display panel 15.

In this embodiment, the drive frequency of the liquid crystal display panel 15 is not changed and is maintained at 120 Hz. If instructions are given for the multi-screen display, the controlling portion 17 and the memory 21 make up a means of inserting between the frames of the input image signal an image signal of the previous or subsequent frame to convert the number of frames of the input image signal. That is, the frame rate (the number of frames) of the display image signal input to the electrode driving portion 14 is always the same.

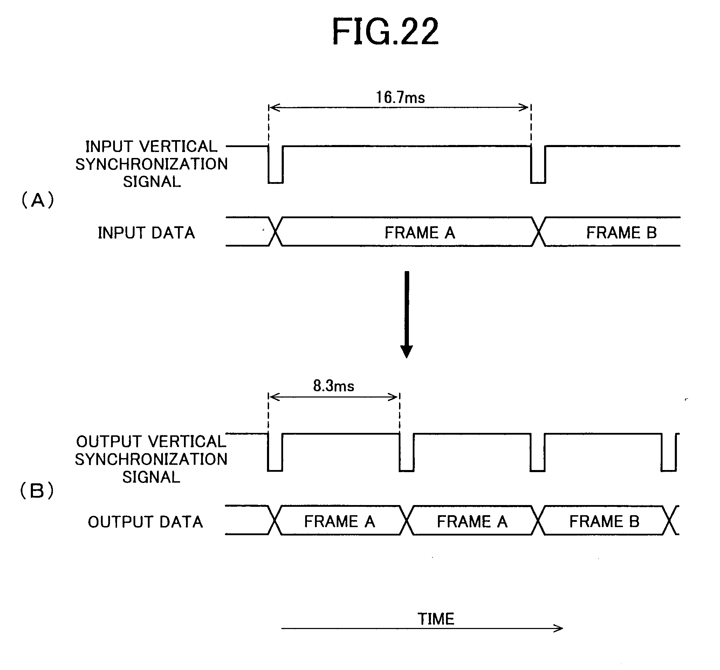

Fig. 22 is a view of a relationship between input data and output data according to the twelfth embodiment of the present invention. Fig. 22 (A) shows the input data to the path 19 and Fig. 22(B) shows the output data from the path 19. As shown in Fig. 22(A), if the input image signal (input data) is input to the path 19 with a frame frequency of 60 Hz, the display time per frame is about 16.7 ms. The input data are temporarily accumulated in the memory 21, and an image signal of the frame (in the figure, frame A) is output which is repeatedly read from the memory 21 at double speed as shown in Fig. 22(B).

The liquid crystal display panel 15 displays the output data inserted with the image signal of the same frame at the drive frequency of 120 Hz. Since the number of frames is converted by repeatedly reading the same frame twice, the display time per frame is about 8.3 ms in this case.

Since the interpolation process through motion compensation is not performed for the input image signal when performing the multi-screen display, the image quality deterioration due to the motion-compensated FRC process can effectively be prevented. Since the frame rate is converted by repeatedly reading the same frame in this case, the drive frequency of the liquid crystal display panel 15 does not need to be changed.

### (Thirteenth Embodiment)

In a thirteenth embodiment of the present invention, a path is provided to bypass the FRC portion 10, and when a user gives instructions for the multi-screen display to combine and display a plurality of screens for displaying a plurality of image signals, the input image signal is input to the bypass path side and the input image signal is input to a linear interpolation processing portion on the path to interpolate an image signal subjected to the linear interpolation. That is, when performing the multi-screen display, the switching is performed such that the frame rate is converted by performing the linear interpolation process rather than the interpolation process through motion compensation.

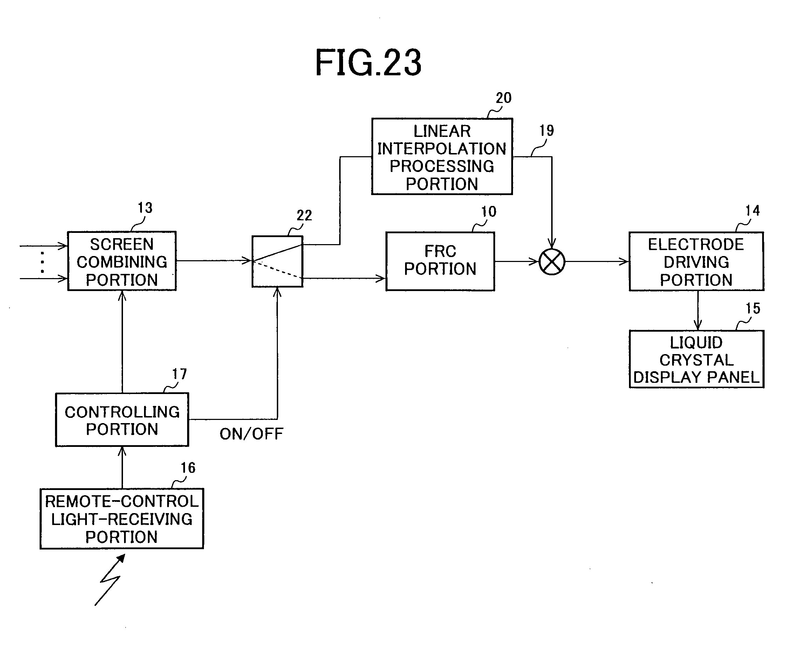

Fig. 23 is a block diagram of an exemplary main configuration of a liquid crystal display device according to the thirteenth embodiment of the present invention and the liquid crystal display device includes the FRC portion 10, the screen combining portion 13, the electrode driving portion 14, the liquid crystal display panel 15, the remote-control light-receiving portion 16, the controlling portion 17, the switching portion 22, the path 19 for bypassing the FRC portion 10, and the linear interpolation processing portion 20 on the path 19. The switching portion 22 is disposed on the previous stage of the FRC portion 10 and switches whether the input image signal is input to the FRC portion 10 or input to the path 19 in accordance with the instruction from the controlling portion 17.

If a user gives instructions for the multi-screen display, the controlling portion 17 switches the switching portion 22 to the path 19 side to bypass the FRC portion 10 and the input image signal is input to the linear interpolation processing portion 20. The linear interpolation processing portion 20 inserts an interpolation frame subjected to the linear interpolation process between frames. If no instruction is given for the multi-screen display, the switching portion 22 is switched to the FRC portion 10 side to perform the FRC process (motion-compensated frame interpolation process) for the input image signal. The switching portion 22 may be disposed on the subsequent stage of the FRC portion 10 such that the output signal of the FRC portion 10 and the output signal of the linear interpolation processing portion 20 are switched and output to the liquid crystal display panel 15.

In this embodiment, the drive frequency of the liquid crystal display panel 15 is not changed and is maintained at 120 Hz. That is, the frame rate (the number of frames) of the display image signal input to the electrode driving portion 14 is always the same. When performing the multi-screen display, the linear interpolation processing portion 20 makes up a means of interpolating between the frames of the input image signal an image signal subjected to the linear interpolation process to convert the number of frames of the input image signal. In the linear interpolation process, as described in above non-patent document 2, an interpolation frame is acquired through linear interpolation using a frame interpolation ratio α from the signal of the previous frame and the signal of the current frame.

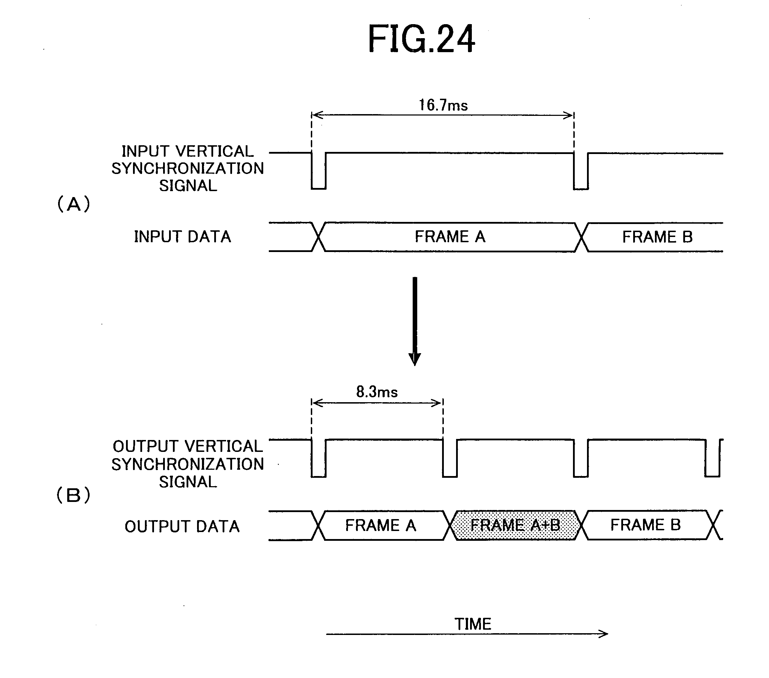

Fig. 24 is a view of a relationship between input data and output data according to the thirteenth embodiment of the present invention. Fig. 24 (A) shows the input data to the path 19 and Fig. 24(B) shows the output data from the path 19. As shown in Fig. 24(A), if the input image signal (input data) is input to the path 19 with a frame frequency of 60 Hz, the display time per frame is about 16.7 ms. The input data are input to the linear interpolation processing portion 20, and the image signal subjected to the linear interpolation process (in the figure, frame A+B) is interpolated and output between the frames (in this case, between frames A and B) as shown in Fig. 24(B).

The liquid crystal display panel 15 displays the output data interpolated with the image signal subjected to the linear interpolation process at the drive frequency of 120 Hz. Since the number of frames is converted by interpolating the image signal subjected to the linear interpolation process, the display time per frame is about 8.3 ms in this case.

Since the interpolation process through motion compensation is not performed for the input image signal when performing the multi-screen display, the image quality deterioration due to the motion-compensated FRC process can effectively be prevented. Since the frame rate is converted by interpolating the image signal subjected to the linear interpolation process in this case, the drive frequency of the liquid crystal display panel 15 does not need to be changed.

### (Fourteenth Embodiment)

In a fourteenth embodiment of the present invention, a path is provided to bypass the FRC portion 10, and when a user gives instructions for the multi-screen display to combine and display a plurality of screens for displaying a plurality of image signals, the input image signal is input to the bypass path side and the input image signal is input to a black-level signal insert processing portion on the path to insert a predetermined monochromatic image signal such as a black-level signal. That is, when performing the multi-screen display, the switching is performed such that the frame rate is converted by performing the monochromatic image insert process rather than the interpolation process through motion compensation.

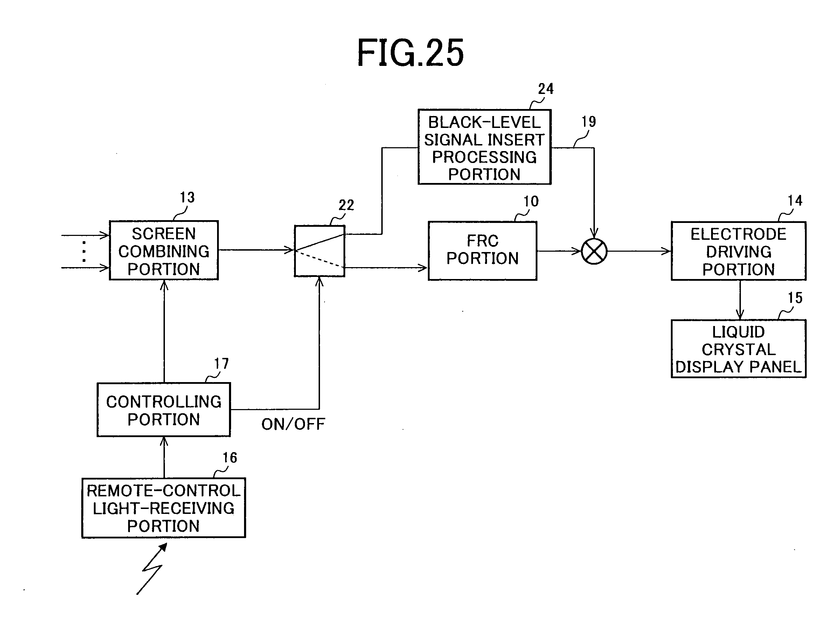

Fig. 25 is a block diagram of an exemplary main configuration of a liquid crystal display device according to the fourteenth embodiment of the present invention and the liquid crystal display device includes the FRC portion 10, the screen combining portion 13, the electrode driving portion 14, the liquid crystal display panel 15, the remote-control light-receiving portion 16, the controlling portion 17, the switching portion 22, the path 19 for bypassing the FRC portion 10, and a black-level signal insert processing portion 24 on the path 19. The switching portion 22 is disposed on the previous stage of the FRC portion 10 and switches whether the input image signal is input to the FRC portion 10 or input to the path 19 in accordance with the instruction from the controlling portion 17.

If a user gives instructions for the multi-screen display, the controlling portion 17 switches the switching portion 22 to the path 19 side to bypass the FRC portion 10 and the input image signal is input to the black-level signal insert processing portion 24. The black-level signal insert processing portion 24 performs the time warping (frame rate conversion) for the input image signal with the use of a memory to insert the predetermined monochromatic image signal such as a black-level signal between the input frames. If no instruction is given for the multi-screen display, the switching portion 22 is switched to the FRC portion 10 side to perform the FRC process (motion-compensated frame interpolation process) for the input image signal. The switching portion 22 may be disposed on the subsequent stage of the FRC portion 10 such that the output signal of the FRC portion 10 and the output signal of the black-level signal insert processing portion 24 are switched and output to the liquid crystal display panel 15.

In this embodiment, the drive frequency of the liquid crystal display panel 15 is not changed and is maintained at 120 Hz. That is, the frame rate (the number of frames) of the display image signal input to the electrode driving portion 14 is always the same. When performing the multi-screen display, the black-level signal insert processing portion 24 makes up a means of inserting the predetermined monochromatic image signal such as a black-level signal between the frames of the input image signal to convert the number of frames of the input image signal. Another embodiment of the black-level signal insert process may be configured such that the electrode driving portion 14 applies a black write voltage to the liquid crystal display panel 15 for a predetermined period (in the case of this example, 1/120 second).

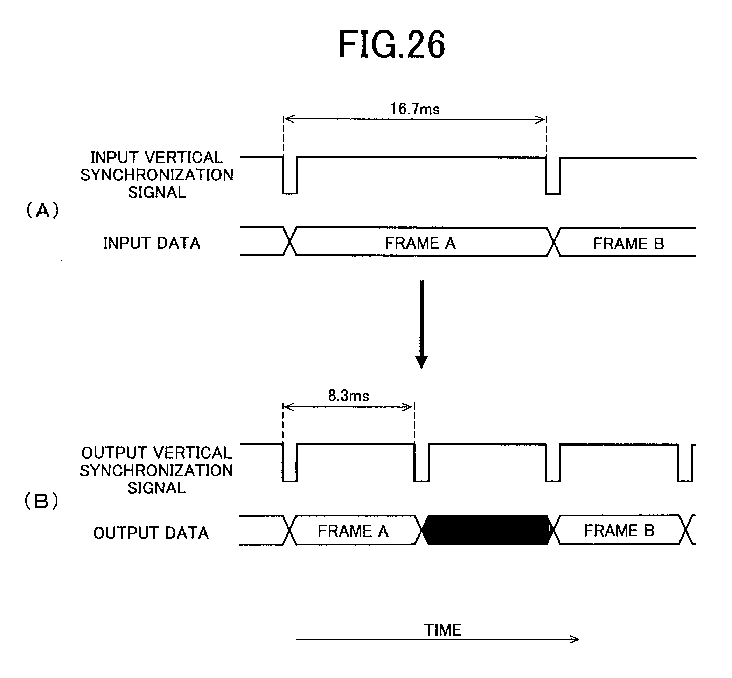

Fig. 26 is a view of a relationship between input data and output data according to the fourteenth embodiment of the present invention. Fig. 26 (A) shows the input data to the path 19 and Fig. 26(B) shows the output data from the path 19. As shown in Fig. 26(A), if the input image signal (input data) is input to the path 19 with a frame frequency of 60 Hz, the display time per frame is about 16.7 ms. The input data are input to the black-level signal insert processing portion 24, and a black-level signal (in the figure, black-colored frame) is inserted and output between the frames (in this case, between the frames A and B) as shown in Fig. 26(B).

Although the image quality deterioration due to the motion blur is improved and the image quality deterioration is not generated due to the motion compensation errors by inserting the black image signal between the frames of the input image signal in this way, the emission luminance must be increased in a backlight (not shown) disposed on the backside of the liquid crystal display panel 15 to compensate the reduction of the display luminance due to the shortening of the image display period.

The liquid crystal display panel 15 displays the output data inserted with the black-level signal at the drive frequency of 120 Hz. Since the number of frames is converted by inserting the black-level signal, the display time per frame is about 8.3 ms in this case.

Since the interpolation process through motion compensation is not performed for the input image signal when performing the multi-screen display, the image quality deterioration due to the motion-compensated FRC process can effectively be prevented. Since the frame rate is converted by inserting the monochromatic image signal in this case, the drive frequency of the liquid crystal display panel 15 does not need to be changed. The moving image quality improving effect can also be maintained in this case.

Other than the above embodiment, if instructions are given for the multi-screen display, the image quality deterioration due to the motion-compensated FRC process may be prevented while maintaining the moving image quality improving effect by dividing the original image of the input frame into a plurality of frame images at a predetermined luminance ratio to convert the frame rate.

### (Fifteenth Embodiment)

In a fifteenth embodiment of the present invention, when a user gives instructions for the multi-screen display to combine and display a plurality of screens for displaying a plurality of image signals, the compensation intensity of the motion compensation process can be varied in the interpolation frame generating portion. Specifically, the interpolation frame generating portion is included that performs weighted addition of the image signal subjected to the motion compensation process and the image signal subjected to the linear interpolation process at a predetermined rate to generate an interpolation frame, and the weighted addition rate can be varied at the time of the multi-screen display.

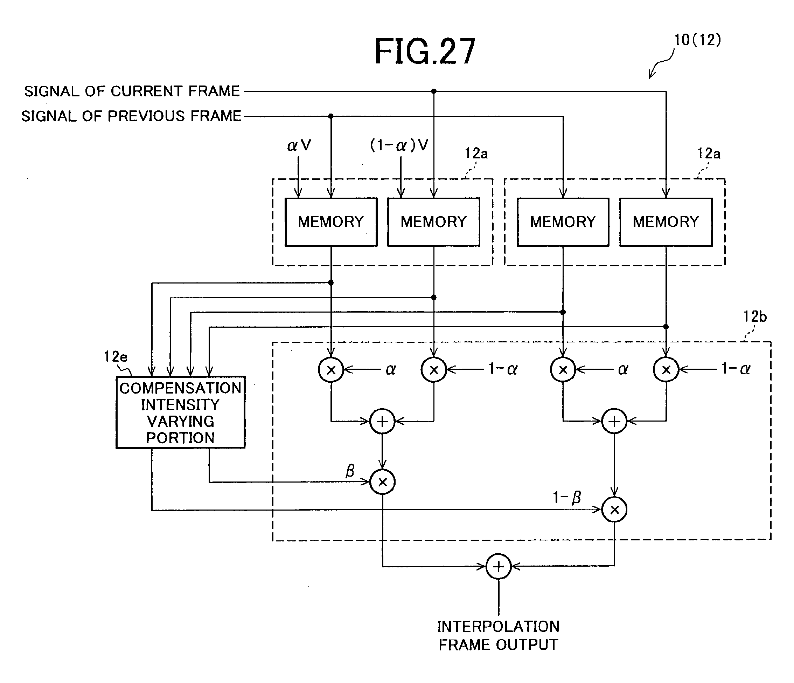

Fig. 27 is a block diagram of an exemplary main configuration of the FRC portion 10 according to the fifteenth embodiment of the present invention, and the frame generating portion 12 of the FRC portion 10 includes the interpolation frame memory 12a, the interpolation frame generating portion 12b, and the compensation intensity varying portion 12e that can vary the compensation intensity of the motion compensation process in the FRC portion 10. In Fig. 27, V denotes an interpolation vector; α denotes a frame interpolation ratio; and β denotes compensation intensity (weighted addition rate).

Generally, known methods of the frame interpolation process include the frame interpolation through the linear interpolation between two frames and the frame interpolation using motion vectors (motion-compensated interpolation). In the former case, an interpolation frame is acquired through the linear interpolation from the signal of the previous frame and the signal of the current frame at a frame interpolation ratio α. Therefore, using this linear interpolation can prevent the image quality deterioration due to the motion compensation errors in the FRC process.

On the other hand, to acquire an interpolation frame from the previous frame and the current frame in the latter case, the interpolation vector V is detected from the motion vectors between the previous frame image and the current frame image, and the interpolation frame is acquired from the weighted addition of a signal of the previous frame image shifted by a degree of αV obtained by dividing the value (interpolation vector V) by the frame interpolation ratio α and a signal of the current frame image shifted by (1-α)V. Although good image quality can be acquired without deteriorating the resolution since a moving image itself is captured and motion-compensated by using this motion-compensated interpolation, the image quality may be deteriorated in the multi-screen display video due to this process.

Therefore, in this embodiment, the compensation intensity varying portion 12e is provided in the frame generating portion 12. When a user gives instructions for the multi-screen display, the compensation intensity varying portion 12e varies the weighted addition rate β. The weighted addition rate β is a rate for performing the weighted addition of the image signal subjected to the motion compensation process and the image signal subjected to the linear interpolation process. The interpolation frame generating portion 12b of this embodiment performs the weighted addition of the linear interpolation and the motion-compensated interpolation in accordance with the weighted addition rate β to generate the interpolation frame.

For example, when a user gives instructions for the multi-screen display, the compensation intensity varying portion 12e sets the weighted addition rate β=0 and defines the image signal subjected to the linear interpolation process as the interpolation frame to prevent the image quality deterioration due to the motion compensation errors. On the other hand, when a user does not give instructions for the multi-screen display, the weighted addition rate β=1 is set to define the image signal subjected to the motion compensation process as the interpolation frame to achieve better image quality for the moving image.

Since the weighted addition rate β can arbitrarily and variably be set, the rate may be set to a substantially intermediate value between zero and one. This enables control to be performed such that the image quality deterioration due to the motion compensation errors is constrained while performing the motion compensation in the interpolation frame image, and this can appropriately improve both the image quality deterioration due to the motion blur and the image quality deterioration due to the motion compensation errors.

When performing the multi-screen display, since the compensation intensity can be varied (weakened) in the motion compensation process in the FRC, the image quality deterioration due to the motion-compensated FRC process can effectively be constrained by reducing the effects of the motion-vector detection errors, the motion compensation errors, etc.

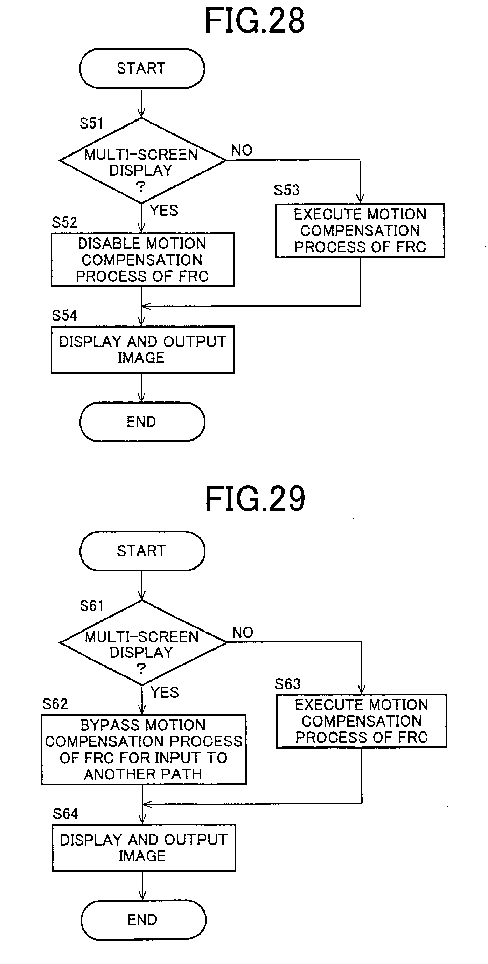

Fig. 28 is a flowchart for explaining an example of an image display method by the image display device of the present invention. An example of the image display method in the ninth embodiment will be described here. First, the image display device determines, based on the received remote control signal, whether a user gives instructions for the multi-screen display, i.e., whether a plurality of screens is combined to display a plurality of image signals (step S51), and if it is determined that the instructions are given for the multi-screen display (in the case of YES), the motion vector or the interpolation vector is set to zero vector to disable the motion compensation process of the FRC portion 10 (step S52).

If it is determined at step S51 that a user does not give instructions for the multi-screen display (in the case of NO), the motion compensation process of the FRC portion 10 is executed as usual (step S53). The image signal with the frame frequency converted in this way is displayed and output from the liquid crystal display panel 15 (step S54).

Fig. 29 is a flowchart for explaining another example of the image display method by the image display device of the present invention. An example of the image display method in the tenth to fourteenth embodiments will be described here. First, the image display device determines, based on the received remote control signal, whether a user gives instructions for the multi-screen display, i.e., whether a plurality of screens is combined to display a plurality of image signals (step S61), and if it is determined that the instructions are given for the multi-screen display (in the case of YES), the motion-compensated frame interpolation process of the FRC portion 10 is bypassed and the input image signal is input to the other path 19 (step S62).

On the bypassing path 19, the image signal is output after the frame rate is converted by executing any one of the inter-frame interpolation of the image signal subjected to the linear interpolation process, the inter-frame insert of the image signal of the same frame, and the inter-frame insert of the predetermined monochromatic image signal such as a black-level signal, or the input image signal is directly output to execute a process such as changing the drive frequency of the liquid crystal display panel 15.

If it is determined at step S61 that a user does not give instructions for the multi-screen display (in the case of NO), the image signal is output that is subjected to the interpolation process through motion compensation by the FRC portion 10 (step S63). Finally, the image is displayed and output on the liquid crystal display panel 15 (step S64).

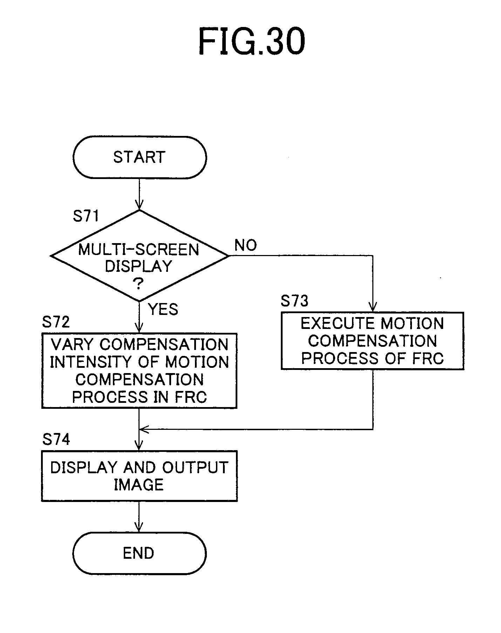

Fig. 30 is a flowchart for explaining another example of the image display method by the image display device of the present invention. An example of the image display method in the fifteenth embodiment will be described here. First, the image display device determines, based on the received remote control signal, whether a user gives instructions for the multi-screen display, i.e., whether a plurality of screens is combined to display a plurality of image signals (step S71), and if it is determined that the instructions are given for the multi-screen display (in the case of YES), the compensation intensity is varied (weakened) in the motion compensation process of the FRC portion 10 (step S72).

If it is determined at step S71 that a user does not give instructions for the multi-screen display (in the case of NO), the compensation intensity is increased as usual in the motion compensation process of the FRC portion 10 (step S73). The image signal with the frame frequency converted in this way is displayed and output from the liquid crystal display panel 15 (step S74).

As described above, according to the present invention, when combining a plurality of images for the multi-screen display, since the appropriate control can be performed such as disabling the motion compensation process for the entire screen (entire area of the display screen), the image quality deterioration due to the motion-vector detection errors, the motion-compensation errors, etc., can effectively be prevented.

It is needless to say that the image signals combined by the screen combining portion 13 are not limited to the television broadcast signals and may be image signals reproduced from an external medium.

## Claims

1. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device matching motion detection block boundaries when applying the motion compensation process with the respective screen boundaries of the plurality of screens.

2. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device comprising a controlling means that controls the motion compensation process for the respective screen boundary parts of the plurality of screens.

3. The image display device as defined in claim 2, wherein
the rate converting means includes a motion vector detecting portion that detects motion vector information between consecutive frames or fields included in the input image signal,
an interpolation vector allocating portion that allocates an interpolation vector between the frames or the fields based on the detected motion vector information,
an interpolation image generating portion that generates an interpolation image signal from the allocated interpolation vector, and
an image interpolating portion that interpolates the generated interpolation image signal between the frames or the fields.

4. The image display device as defined in claim 3, wherein
the controlling means performs control such that the motion vector detecting portion avoids detecting a motion vector having a value crossing a boundary of the screens.

5. The image display device as defined in claim 3 or 4, wherein
the rate converting means includes an initial vector memory that accumulates an initial vector used to detect motion vectors, and wherein
the controlling means performs control such that the motion vector detecting portion avoids selecting an initial vector having a value crossing a boundary of the screens from the initial vector memory.

6. The image display device as defined in claim 3, wherein
the controlling means performs control such that the motion vector detected by the motion vector detecting portion in the screen boundary part is set to be a zero vector.

7. The image display device as defined in claim 3, wherein
the controlling means performs control such that the interpolation vector allocating portion avoids evaluating a motion vector having a value crossing a boundary of the screens.

8. The image display device as defined in claim 3, wherein
the controlling means performs control such that an interpolation vector of an interpolation block in the screen boundary part is set to be a zero vector.

9. The image display device as defined in claim 8, wherein
the controlling means adds flag information to the interpolation block in the screen boundary part to set the output to zero for the interpolation vector of the interpolation block with the flag information added.

10. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device further comprising another rate converting means that inserts an image signal not subjected to the motion compensation process between frames or fields of the input image signal to convert the number of frames or fields of the input image signal,
the device outputting an image signal with the number of frames or fields converted by the another rate converting means to the display panel for the respective screen boundary parts of the plurality of screens.

11. The image display device as defined in claim 10, wherein
the another rate converting means interpolates an image signal subjected to a linear interpolation process between frames or fields of the input image signal to convert the number of frames or fields of the input image signal.

12. The image display device as defined in claim 10, wherein
the another rate converting means inserts between frames or fields of the input image signal an image signal of the frames or fields to convert the number of frames or fields of the input image signal.

13. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device varying compensation intensity of the motion compensation process for the respective screen boundary parts of the plurality of screens.

14. The image display device as defined in claim 13, wherein
the rate converting means includes an interpolation image generating portion that performs weighted addition of the image signal subjected to the motion compensation process and an image signal subjected to a linear interpolation process at a predetermined rate to generate an interpolation image signal, and wherein
the weighted addition rate is varied for the respective screen boundary parts of the plurality of screens.

15. The image display device as defined in claim 14, wherein
the interpolation image generating portion defines the image signal subjected to the linear interpolation process as the interpolation image signal for the respective screen boundary parts of the plurality of screens, and wherein
the interpolation image generating portion defines the image signal subjected to the motion compensation process as the interpolation image signal for the parts other than the respective screen boundary parts of the plurality of screens.

16. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device comprising a controlling means that disables the motion compensation process in the rate converting means when the plurality of screens is combined and displayed.

17. The image display device as defined in claim 16, wherein
the rate converting means includes a motion vector detecting portion that detects motion vector information between consecutive frames or fields included in the input image signal,
an interpolation vector allocating portion that allocates an interpolation vector between the frames or the fields based on the detected motion vector information,
an interpolation image generating portion that generates an interpolation image signal from the allocated interpolation vector, and
an image interpolating portion that interpolates the generated interpolation image signal between the frames or the fields.

18. The image display device as defined in claim 17, wherein
when the plurality of screens is combined and displayed, the controlling means sets the motion vector detected by the motion vector detecting portion to a zero vector to disable the motion compensation process.

19. The image display device as defined in claim 17, wherein
when the plurality of screens is combined and displayed, the controlling means sets the interpolation vector allocated by the interpolation vector allocating portion to a zero vector to disable the motion compensation process.

20. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device outputting the input image signal to the display panel without converting the number of frames or fields of the input image signal when the plurality of screens is combined and displayed.

21. The image display device as defined in claim 20, wherein
a drive frequency of the display panel displaying the image signals can be changed, and wherein
when the plurality of screens is combined and displayed, the drive frequency of the display panel is changed in accordance with a frame frequency or a field frequency of the input image signal.

22. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device further comprising another rate converting means that inserts an image signal not subjected to the motion compensation process between frames or fields of the input image signal to convert the number of frames or fields of the input image signal,
the device outputting an image signal with the number of frames or fields converted by the another rate converting means to the display panel when the plurality of screens is combined and displayed.

23. The image display device as defined in claim 22, wherein
the another rate converting means inserts between frames or fields of the input image signal an image signal of the frames or fields to convert the number of frames or fields of the input image signal.

24. The image display device as defined in claim 22, wherein
the another rate converting means interpolates an image signal subjected to a linear interpolation process between frames or fields of the input image signal to convert the number of frames or fields of the input image signal.

25. The image display device as defined in claim 22, wherein
the another rate converting means inserts a predetermined monochromatic image signal between frames or fields of the input image signal to convert the number of frames or fields of the input image signal.

26. An image display device comprising a rate converting means that interpolates an image signal subjected to a motion compensation process between frames or fields of an input image signal to convert and output the number of frames or fields of the input image signal to a display panel,
the device including a screen combining means that combines a plurality of screens for displaying a plurality of image signals,
the device varying compensation intensity of the motion compensation process in the rate converting means when the plurality of screens is combined and displayed.

27. The image display device as defined in claim 26, wherein
the rate converting means includes an interpolation image generating portion that performs weighted addition of the image signal subjected to the motion compensation process and an image signal subjected to a linear interpolation process at a predetermined rate to generate an interpolation image signal, and wherein
the weighted addition rate is varied when the plurality of screens is combined and displayed.

28. The image display device as defined in claim 27, wherein
the interpolation image generating portion defines the image signal subjected to the linear interpolation process as the interpolation image signal when the plurality of screens is combined and displayed, and wherein
the interpolation image generating portion defines the image signal subjected to the motion compensation process as the interpolation image signal when the plurality of screens is not combined and displayed.

29. An image display method having the step of interpolating an image signal subjected to a motion compensation process between frames or fields of an input image signal to convert and output the number of frames or fields of the input image signal to a display panel, comprising the steps of:
combining a plurality of screens for displaying a plurality of image signals; and
matching motion detection block boundaries when applying the motion compensation process with the respective screen boundaries of the plurality of screens.

30. An image display method having the step of interpolating an image signal subjected to a motion compensation process between frames or fields of an input image signal to convert and output the number of frames or fields of the input image signal to a display panel, comprising the steps of:
combining a plurality of screens for displaying a plurality of image signals, and
controlling the motion compensation process for the respective screen boundary parts of the plurality of screens.

31. The image display method as defined in claim 30, wherein
control is performed to avoid detecting a motion vector having a value crossing a boundary of the screens.

32. The image display method as defined in claim 30 or 31, wherein
control is performed to avoid selecting an initial vector having a value crossing a boundary of the screens.

33. The image display method as defined in claim 30, wherein
control is performed to set the motion vector in the screen boundary part to a zero vector.

34. The image display method as defined in claim 30, wherein
control is performed to set an interpolation vector of an interpolation block in the screen boundary part to a zero vector.

35. An image display method having the step of interpolating an image signal subjected to a motion compensation process between frames or fields of an input image signal to convert and output the number of frames or fields of the input image signal to a display panel, comprising the steps of:
combining a plurality of screens for displaying a plurality of image signals; and
interpolating an image signal subjected to a linear interpolation process between frames or fields of the input image signal for the respective screen boundary parts of the plurality of screens.

36. An image display method having the step of interpolating an image signal subjected to a motion compensation process between frames or fields of an input image signal to convert and output the number of frames or fields of the input image signal to a display panel, comprising the steps of:
combining a plurality of screens for displaying a plurality of image signals; and
inserting between frames or fields of the input image signal an image signal of the frames or fields for the respective screen boundary parts of the plurality of screens.

37. An image display method having the step of interpolating an image signal subjected to a motion compensation process between frames or fields of an input image signal to convert and output the number of frames or fields of the input image signal to a display panel, comprising the steps of:
combining a plurality of screens for displaying a plurality of image signals; and
varying compensation intensity of the motion compensation process for the respective screen boundary parts of the plurality of screens.

38. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
disabling the motion compensation process when it is determined that the plurality of screens is combined.

39. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
changing a drive frequency of a display panel in accordance with a frame frequency or a field frequency of the input image signal when it is determined that the plurality of screens is combined.

40. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
inserting between frames or fields of the input image signal an image signal of the frames or fields to convert the number of frames or fields of the input image signal when it is determined that the plurality of screens is combined.

41. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
interpolating an image signal subjected to a linear interpolation process between frames or fields of the input image signal to convert the number of frames or fields of the input image signal when it is determined that the plurality of screens is combined.

42. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
inserting a predetermined monochromatic image signal between frames or fields of the input image signal to convert the number of frames or fields of the input image signal when it is determined that the plurality of screens is combined.

43. An image display method having the step of interpolating an image signal subjected to a motion compensation process between frames or fields of an input image signal to convert the number of frames or fields of the input image signal, comprising the steps of:
determining whether a plurality of screens is combined for displaying a plurality of image signals; and
varying compensation intensity of the motion compensation process when it is determined that the plurality of screens is combined.
